# EUROPÄISCHE PATENTSCHRIFT

(11) **EP 3 655 246 B1**
(45) Veröffentlichungstag und Bekanntmachung des Hinweises auf die Patenterteilung: **30.08.2023**
(21) Anmeldenummer: 18739528.0
(22) Anmeldetag: 10.07.2018
(51) Int. Cl.: B32B 7/12, B32B 15/085, B32B 15/12, B32B 15/20, B32B 27/08, B32B 27/10, B32B 27/30, B32B 27/32, B32B 27/34, B32B 27/36, B32B 37/00, B32B 3/30

(54) **PACKUNGSLAMINAT UND VERFAHREN ZUR BILDUNG EINER PACKUNG MIT EINEM FUNKTIONSELEMENT**
PACKAGING LAMINATE AND METHOD FOR FORMING A PACKAGING WITH A FUNCTIONAL ELEMENT
STRATIFIÉ D'EMBALLAGE ET PROCÉDÉ DE FORMATION D'UN EMBALLAGE À ÉLÉMENT FONCTIONNEL

(30) Priorität: 18.07.2017 DE 102017116170
(43) Veröffentlichungstag der Anmeldung: 27.05.2020
(73) Patentinhaber: SIG Combibloc Services AG, 8212 Neuhausen am Rheinfall (CH)
(72) Erfinder: REISERT, Steffen, 52066 Aachen (DE); MALINDRETOS, Lars, 47804 Krefeld (DE)
(74) Vertreter: Cohausz & Florack
(86) Internationale Anmeldenummer: PCT/EP2018/068605
(87) Internationale Veröffentlichungsnummer: WO 2019/016023

(56) Entgegenhaltungen:
- EP-A1- 1 375 131
- EP-A1- 2 390 203
- WO-A1-2017/114705
- WO-A2-03/059622

## Beschreibung

Die Erfindung betrifft ein Packungslaminat zur Bildung einer Packung für fließfähige Produkte, mit einer aus einem Fasermaterial gebildeten, strukturgebenden Trägerschicht und äußeren Deckschichten aus Kunststoff. Ferner betrifft die Erfindung ein Verfahren zur Herstellung eines Packungslaminats zur Bildung einer Packung für fließfähige Produkte.

Unter Packungen im Sinne der vorliegenden Erfindung werden sogenannte Verbundverpackungen angesehen, die der Einfachheit jedoch als Packungen bezeichnet werden. Dass es sich bei den Packungen der Erfindung um Verbundverpackungen handelt, ergibt sich bereits aus der Verwendung eines Packungslaminats zur Bildung der Packungen umfassend unterschiedliche Materialschichten. Bei dem Packungslaminat handelt es sich also um ein Verbundmaterial zur Erzeugung einer Verbundpackung.

Verbundpackungen sind grundsätzlich aus miteinander verbundenen Packstoffen gebildet, die einen flächigen Schichtaufbau, das sogenannte Packungslaminat, bilden. Karton-Verbundpackungen haben eine Kartonschicht, die der Packung die grundlegende Stabilität und damit grundlegende Struktur verleiht. Die Kartonschicht bildet mithin die strukturgebende Trägerschicht, die die Biegesteifigkeit des Packungslaminats wenigstens maßgeblich mit bestimmt, insbesondere aber weit überwiegend bereitstellt. Anders ausgedrückt behält das Packungslaminat und die daraus hergestellte Packung seine bzw. ihre Form aufgrund der strukturgebenden Trägerschicht bei.

Die Trägerschicht trägt zudem die direkt oder indirekt zu beiden Seiten der Trägerschicht angeordneten Deckschichten aus Kunststoff. Die Deckschichten bilden den äußeren Abschluss des Laminats bzw. der daraus hergestellten Packungen, wenngleich die Deckschichten noch bedruckt werden können. Der Druck als solcher wird vorliegend nicht als separate Schicht des Packungslaminats, sondern als Teil der Deckschicht angesehen, auch wenn der Druck und die Deckschicht regelmäßig aus unterschiedlichen Materialien bestehen. Der Druck ist jedoch regelmäßig sehr viel dünner als die Deckschicht als solche. Die Deckschichten dienen beispielsweise als Flüssigkeitssperre. So wird beispielsweise das Eindringen von fließfähigen Produkten in das Packungslaminat, insbesondere die Kartonschicht, oder gar das Auslaufen von fließfähigen Produkten ebenso vermieden, wie das Eindringen von Feuchtigkeit von außen. Ferner lassen sich thermoplastische Kunststoffe unter Ausbildung von stoffschlüssigen Siegelnähten siegeln, um so eine Verpackung zu formen und die Packung zu verschließen. Mithin werden die Deckschichten derzeit überwiegend aus einem Polyolefin, insbesondere Polyethylen, gebildet.

Das Packungslaminat kann weitere Schichten und Packstoffe aufweisen. So stellt beispielsweise eine Aluminiumschicht eine Barrierewirkung gegen Gase und Licht bereit. Um das flächige Packungslaminat falzen, d.h. maschinell falten, zu können, werden oft Rillungen in das Packungslaminat eingebracht, welche die späteren Falzlinien vordefinieren. Die Falzungen bilden an der Packung die Packungskanten und/oder ermöglichen das Ausformen von Packungsboden und/oder Packungskopf. Packungslaminate sind zudem meist mit einem Dekor bedruckt.

Packungslaminate werden regelmäßig als Endlosbahn hergestellt, die als Rollenware zu einer Rolle aufgewickelt wird. Die einzelnen Schichten des Packungsmaterials, insbesondere die Trägerschicht wird von einer Rolle abgewickelt und mit anderen Schichten flächig verbunden, die ebenfalls von einer Rolle abgewickelt oder inline mit der Packungslaminatherstellung extrudiert und sodann mit der Materialbahn verbunden werden. Es können aber auch Schichten aufgewalzt werden oder es wird die Materialbahn durch ein Materialbad gezogen, um eine weitere Materialschicht zu bilden. Letzteres kann insbesondere für den Auftrag von Haftvermittlern oder Klebstoffen zum Verbinden benachbarter Materialbahnen in Frage kommen. Bei geeigneten Materialpaarungen können die Materialschichten aber auch direkt miteinander verbunden werden. Ein Packungslaminat ist beispielsweise aus der WO 03/059622 A2 bekannt.

Das Packungslaminat kann also als Bahnmaterial oder Endlosmaterial, insbesondere als Rollenware, bereitgestellt werden, aus dem, ohne zunächst einen Zuschnitt zu erzeugen, direkt eine Verpackung geformt werden kann. Dabei wird die Rollenware zunächst umgebogen und entlang ihrer Längsränder durch Siegeln zu einem Schlauch geformt und in Längsrichtung flüssigkeitsdicht verschlossen. Anschließend werden in regelmäßigen Abständen flüssigkeitsdichte Quernähte gesiegelt. In die oben offenen Schlauchtaschen kann dann jeweils Produkt eingefüllt werden, bevor die Schlauchtaschen durch die jeweils nächsten Quernähte zu Packungen verschlossen werden.

Alternativ kann das Packungslaminat vor dem Formen der Verpackung in Längs- und/oder Querrichtung zugeschnitten werden, wodurch sogenannte Zuschnitte erzeugt werden. Diese können zu sogenannten Packungsmantelrohlingen in Form von Packungsmänteln oder Packungssleeves weiterverarbeitet werden. Dazu werden die Längsränder übereinandergelegt und unter Ausbildung einer Längssiegelnaht aufeinander gesiegelt. Man erhält so bedarfsweise rohrförmige Packungsmäntel, die flachgefaltet werden und zur Weiterverarbeitung an einem anderen Ort, insbesondere in einer Füllmaschine, gestapelt werden. In den Füllmaschinen kann dann aus den Packungsmänteln eine geformte und gefüllte Packung hergestellt werden.

In den Packungen werden typischerweise Produkte in Form von Lebensmitteln, insbesondere Getränken, abgefüllt, wobei als Produkte überwiegend fließfähige Produkte in Frage kommen. Dabei erfolgt insbesondere das Befüllen der Packungskörper mit Lebensmitteln in einer sterilen oder aseptischen Umgebung einer Füllmaschine, da die Lebensmittel nach dem Füllen der Packungen lange haltbar sein sollen. Hierzu weisen die Füllmaschinen beispielsweise Sterilisationsräume bzw. Aseptikkammern auf, in denen die Packungskörper sterilisiert und anschließend unter möglichst sterilen Bedingungen gefüllt sowie verschlossen werden. Nach dem Befüllen der Packungskörper werden diese typischerweise in der Füllmaschine verschlossen. Bei Verwendung entsprechender Packstoffe erfolgt das Verschließen des Packungskörpers durch Siegeln des offenen Endes.

Die flachgefalteten Packungsmäntel werden als Stapel an ein Magazin der Füllmaschine übergeben und nacheinander aufgefaltet. Das Auffalten erfolgt entlang vorgefalteter Faltlinien, an denen das Packungslaminat leicht geknickt bzw. gefaltet werden kann. Der entsprechend aufgefaltete Packungsmantel wird sodann auf einen Dorn eines sogenannten Dornrades aufgezogen. Der Packungsmantel steht dabei zunächst über den Dorn nach außen vor, so dass der vorstehende Teil des Packungsmantels gegen die Stirnseite des Dorns gefaltet und dort verpresst und gesiegelt, also verschlossen, werden kann. Das verschlossene Ende des Packungsmantels kann später den Boden oder den Kopf der Packung bilden.

Die so geschaffenen, einseitig offenen Packungskörper werden in eine Sterilisationszone der Füllmaschine eingeschleust, wo diese in definierter Geschwindigkeit und in definiertem Abstand zueinander durch die Sterilisationszone der Füllmaschine transportiert werden. In der Sterilisationszone werden die Packungskörper mit heißer Sterilluft vorgewärmt und sodann, typischerweise mit Wasserstoffperoxid, sterilisiert und mit Sterilluft getrocknet. Die sterilen Packungskörper werden in die Füll- und Siegelzone übergeben und dort befüllt. Anschließend wird die Öffnung der gefüllten Packungskörper verschlossen, bevor die verschlossene Packung über die Transporteinrichtung aus der Füll- und Siegelzone transportiert und anschließend aus den entsprechenden Zellen der Transporteinrichtung entnommen wird.

In einigen Füllmaschinen werden die Packungskörper von einer Transporteinrichtung, etwa einer Zellenkette, in einer geraden Linie durch die Füllmaschine transportiert. Entsprechende Füllmaschinen werden auch als Langläufer bezeichnet. In anderen Fülleinrichtungen, den sogenannten Rundläufern, beschreiben die Packungskörper eine mehr oder weniger bogenförmige Bewegung, die ein oder mehr Kreisbogenabschnitte umfassen kann.

Das in den Packungen aufzunehmende Produkt ist vorzugsweise ein Lebensmittel, insbesondere ein Getränk, und kann bedarfsweise stückige Anteile aufweisen. Grundsätzlich sind die Produkte schüttfähig oder rieselfähig, insbesondere fließfähig. Besonders bevorzugt sind entsprechende Packungen zur Aufnahme eines wenigstens eine flüssige Komponente aufweisenden Lebensmittels.

Die Anforderungen an die Packungen werden immer umfangreicher. Ein neuerer Trend besteht darin, ergänzende Informationen über die Packung bzw. das verpackte Produkt zu erhalten, die nicht auf der Packung aufgedruckt sind oder nicht praktikabel auf die Packung aufgedruckt werden können. Diese Informationen können packungsspezifisch bzw. packungsindividualisiert sein. So kann jeder Packung, bedarfsweise vom Endkunden beispielsweise die Information entnommen werden, wann genau die Packung abgefüllt wurde, mit welchem Produkt oder welcher Produktcharge die Packung gefüllt wurde, an welchem Ort die Packung abgefüllt wurde, zu welcher Charge die Packung gehört, auf welcher Füllmaschine die Packung abgefüllt wurde usw. Für all diese Zwecke ist es erforderlich, die Packungen leicht mit verschiedenen Informationen beschreiben zu können, die bei der Herstellung des Packungslaminats noch gar nicht bekannt sind, sondern erst kurz vor, bei dem und/oder nach dem Füllen angegeben werden können. Hierzu ist bereits vorgeschlagen worden, RFID-Transponder auf Packungen aufzukleben. Der Begriff RFID steht dabei für Radio-Frequency Identification bzw. die Identifizierung mit Hilfe elektromagnetischer Wellen. RFID-Transponder ermöglichen es, ohne eigene Energie des Transponders auf den Transponder Informationen zu speichern und diese Informationen wieder auszulesen. Ein entsprechendes Packungslaminat ist beispielsweise aus der EP 2 390 203 A1 bekannt. Zudem ist ein anderes Laminat aus der EP 1 375 131 A1 bekannt.

Zudem ist es wünschenswert, Informationen über den aktuellen Zustand des abgefüllten Produkts zu erhalten, etwa dazu, ob das Produkt noch die qualitativen Mindestanforderungen erfüllt und/oder noch genießbar ist. Die Haltbarkeit von Produkten, wie beispielsweise Lebensmitteln, ist stark von der Handhabung der Packung, insbesondere der Kühlung der Packung nach dem Abfüllen abhängig. Bekannte Mindesthaltbarkeitsdaten geben nur eine Haltbarkeit an, die bei vorgesehener Kühlung mindestens erreicht werden soll. Ob das Produkt zu diesem Zeitpunkt tatsächlich oder auch weit nachträglich noch problemlos zu verwenden bzw. zu verzehren ist, kann an der Packung von außen regelmäßig nicht abgelesen werden.

Um hier mehr Transparenz zu schaffen, sind Sensoren bekannt, die die Kühlkette bzw. die Kühlung während der Handhabung der Packungen erfassen und bestimmte Abweichungen signalisieren, die auf Probleme mit der Verwendbarkeit der Produkte hindeuten können. Diese Sensoren können an Umverpackungen montiert werden, um ganze Chargen von Packungen zu überwachen oder direkt auf einzelne Packungen aufgeklebt werden. Allerdings sind die Aussagen der Sensoren nur vage und die Sensoren selbst recht kostenintensiv.

Daher liegt der vorliegenden Erfindung die Aufgabe zugrunde, das Packungslaminat und das Verfahren zur Herstellung eines Packungslaminats jeweils der eingangs genannten und zuvor näher beschriebenen Art derart auszugestalten und weiterzubilden, dass individuelle Informationen betreffend die Packung und/oder das verpackte Produkt leichter, genauer und/oder kostengünstiger für den Benutzer zur Verfügung gestellt werden können.

Diese Aufgabe ist bei einem Packungslaminat nach dem Oberbegriff von Anspruch 1 dadurch gelöst, dass zwischen der Trägerschicht und einer Deckschicht wenigstens ein als Chipeinheit und Antenneneinheit oder als Transpondereinheit ausgebildetes Funktionselement, vorzugsweise in regelmäßigen Abständen, vorgesehen ist, dass die wenigstens eine Deckschicht im Bereich des Funktionselements durchgängig vorgesehen ist, dass zwischen der Trägerschicht und der wenigstens einen Deckschicht wenigstens eine als Gasbarriere, vorzugsweise als Sauerstoffbarriere, ausgebildete Barriereschicht vorgesehen ist und dass das wenigstens eine Funktionselement zwischen der im Bereich des Funktionselements durchgängig ausgebildeten Barriereschicht und der Trägerschicht vorgesehen ist.

Die genannte Aufgabe ist ferner durch ein Verfahren nach Anspruch 9 gelöst.

Erfindungsgemäß ist also erkannt worden, dass zur Bereitstellung der gewünschten Informationen für den Benutzer wenigstens ein Funktionselement in das Packungslaminat integriert werden kann, und zwar zwischen die Trägerschicht und eine Deckschicht und/oder wenigstens teilweise in die Trägerschicht bzw. Deckschicht. Dies vereinfacht die Herstellung des Packungslaminats und die Anbringung des elektrischen Funktionsteils. Hier kann sich nämlich die strukturgebende und verhältnismäßig biegesteife Trägerschicht genutzt werden. Die Trägerschicht bildet so ein geeignetes Substrat zur Anbringung und Aufnahme des wenigstens einen Funktionselements. Alternativ oder zusätzlich stellt die Trägerschicht eine Schutzwirkung im Hinblick auf das Funktionselement bereit, so dass dieses auf Dauer beschädigungsfrei im Packungslaminat aufgenommen werden kann. So kann beispielsweise das Packungslaminat nach seiner Herstellung problemlos zu einer Rolle aufgerollt werden, um sodann an einen anderen Ort verbracht zu werden. Die Trägerschicht schützt das wenigstens eine Funktionselement vor Beschädigung, insbesondere durch Knicken oder übermäßiges Umbiegen. Das Funktionselement kann aber auch bei der Bildung der Packung und in der Packung selbst durch die Trägerschicht geschützt werden. Bei der Integration des Funktionselements wenigstens teilweise in die Deckschicht kann die Biegesteifigkeit der Trägerschicht ebenfalls genutzt werden. Zudem kann die Schichtdicke des Packungslaminats gering gehalten werden, ohne das Funktionselement wenigstens teilweise in die Trägerschicht aufnehmen zu müssen. Hinzu kommt, dass so bedarfsweise ein Kontakt des Funktionselementes zur Außenseite des Packungslaminats bzw. zur Innenseite der späteren Packung bereitgestellt werden kann.

Das Vorgenannte gilt insbesondere dann, wenn das Funktionselement auf der der Packungsinnenseite zugeordneten Seite der Trägerschicht vorgesehen wird. Ein ähnlicher Schutz des Funktionselements wird erreicht, wenn das Funktionselement wenigstens teilweise in der Trägerschicht aufgenommen wird. Auch hier schützt die Trägerschicht das Funktionselement und da das Funktionselement nicht vollständig außerhalb der Trägerschicht angeordnet ist, kann bei der weiteren Handhabung des Packungslaminats oder der daraus gebildeten Packung eine Beschädigung des Funktionselements, insbesondere durch auf das Packungslaminat einwirkende Scherkräfte vermieden werden.

Insbesondere für den besonders bevorzugten Fall, dass das Packungslaminat als Bandmaterial oder Endlosmaterial gefertigt wird, aus dem dann eine ganze Reihe von Packungen gefertigt werden kann, ist es zweckmäßig, dass das wenigstens eine Funktionselement mehrfach und beabstandet zueinander entlang des Bandmaterials vorgesehen wird. Ganz besonders bevorzugt ist es dabei, wenn die Funktionselemente gleichförmig in regelmäßigen Abständen entlang des Bandmaterials vorgesehen sind. Dies vereinfacht nämlich die Bildung einer ganzen Reihe von gleichartigen Packungen aus dem als Bandmaterial vorliegenden Packungslaminat. Die Funktionselemente sind dabei weiter bevorzugt in Längsrichtung voneinander beabstandet, um das Bandmaterial zweckmäßig in Längsrichtung zur Bildung der Packungen weiterverarbeiten zu können. Es können aber auch in Querrichtung, insbesondere in regelmäßigen Abständen, beabstandete Funktionselemente vorgesehen sein. Dies bietet sich insbesondere an, wenn das Packungslaminat in Längsrichtung aufgetrennt wird, um aus den so erhaltenen einzelnen Teilbahnen jeweils Packungen zu bilden.

Nachfolgend werden der Einfachheit halber und zur Vermeidung unnötiger Wiederholungen das Packungslaminat und das Verfahren zu dessen Herstellung gemeinsam beschrieben, ohne jeweils im Einzelnen zwischen dem Packungslaminat und dem Verfahren zu unterscheiden. Anhand des Kontextes ist jedoch für den Fachmann ersichtlich, welches Merkmal jeweils im Einzelnen für das Packungslaminat und das Verfahren besonders bevorzugt ist.

Bei einer ersten besonders bevorzugten Ausgestaltung des Packungslaminats weist die Chipeinheit wenigstens einen Mikrochip und Anschlüsse zum Anschließen der Chipeinheit an eine Antenneneinheit auf. Der Mikrochip umfasst dabei eine integrierte Schaltung, die vorzugsweise wenigstens eine Speichereinheit zum Speichern einer Information und eine Ausleselogik zum Auslesen der gespeicherten Information umfassen kann. Bedarfsweise kann die Chipeinheit noch ein Trägerelement zur Aufnahme des Mikrochips umfassen. Die Speichereinheit kann einen flüchtigen oder nicht-flüchtigen Speicher darstellen. Gespeichert werden können beispielsweise Daten während der Produktion des Packungslaminats. Es können beispielsweise eindeutige IDs oder Produktionsdaten gespeichert werden. Alternativ oder zusätzlich können Daten an der Füllmaschine und/oder mehreren Punkten der Wertschöpfungskette gespeichert werden. Die Daten können etwa die Füllmaschine und/oder das Produkt betreffen.

Alternativ oder zusätzlich kann die Antenneneinheit wenigstens eine Leiterbahn, vorzugsweise in Form einer Leiterspirale oder Leiterspule, und/oder Anschlüsse zum Anschließen der Antenneneinheit an eine Chipeinheit umfassen. Die Antenneneinheit erlaubt dabei das Auslesen der gespeicherten Information der Chipeinheit. Dabei sind vorzugsweise Funkantennen gemeint, wie sie typischerweise bei RFID (Radio Frequency Identification)-Transpondern oder NFC (Near Field Communication) Tags eingesetzt werden. Insbesondere durch induktive Kopplung auslesbare Elemente können als Antenneneinheit im vorliegenden Sinne angesehen werden. Des Weiteren kann es zweckmäßig sein, wenn die Antenneneinheit ein Trägerelement zur Aufnahme der Leiterbahn umfasst. Auch können die Antenneneinheit und die Chipeinheit auf einem gemeinsamen Trägerelement angeordnet sein.

Die Sensoreinheit kann unabhängig davon wenigstens einen von einer Messgröße beeinflussbaren Messaufnehmer und/oder Messumformer umfassen. Der Messaufnehmer und/oder Messumformer kann dabei unmittelbar zumindest in Teilen auf der äußeren Seite der Deckschicht, der späteren Innenseite der Packung, angeordnet sein oder die Deckschicht in Richtung des Produktes durchbrechen. Dies dient der direkten Erfassung der wenigstens einen Eigenschaft des abgefüllten Produktes. Der Messaufnehmer und/oder Messumformer kann aber auch zumindest in Teilen innerhalb der Deckschicht und insbesondere zwischen der Deckschicht und der Trägerschicht vorgesehen sein. Der Messaufnehmer und/oder Messumformer ist so besser gegenüber äußeren Einflüssen geschützt und kann dennoch zur Erfassung wenigstens einer Eigenschaft des Produktes genutzt werden. Die Messaufnehmer und/oder Messumformer erfassen grundsätzlich bestimmte physikalische, chemische und/oder stoffliche Eigenschaften der näheren Umgebung qualitativ oder quantitativ, wobei diese Erfassung die Eigenschaften der Sensoren derart verändern, dass diese ausgelesen oder entsprechende Informationen weitergegeben werden können.

Die Messaufnehmer können aktiv sein und infolge der Messung ein elektrisches Signal erzeugen. Bevorzugt sind jedoch vielfach passive Messaufnehmer, denen zum Auslesen des Messergebnisses Energie zugeführt werden muss. Als Sensoreinheiten kommen beispielsweise solche zur Erfassung der Temperatur, des pH-Werts, der elektrischen Leitfähigkeit, einer Substanz, der Konzentration einer Substanz oder dergleichen in Frage. Die Substanz kann Rückschlüsse auf die zeitlich veränderliche Qualität des Produkts zulassen und beispielsweise ein Stoffwechselprodukt, Spurenelement und/oder Vitamin sein. Die Erfassung des entsprechenden Messwerts kann zudem direkt oder indirekt erfolgen. Des Weiteren ist keine absolute Erfassung des Messwerts erforderlich. Es kann eine relative Messwerterfassung ausreichen. Beispielsweise kann nach dem Abfüllen des Produkts in die Packung zunächst ein Ausgangswert erfasst und gespeichert werden. Später lässt sich dann ein weiterer Messwert erfassen und mit dem gespeicherten Ausgangswert vergleichen. Aus der relativen Veränderung kann dann auf die Qualität des abgefüllten Produkts geschlossen werden. Bedarfsweise wird geprüft, ob die Veränderung des Messwerts einen vorgegebenen Grenzwert überschritten hat und nur diese Information zum Auslesen bereitgestellt. Auf die beschriebenen Arten kann ein günstigerer Messaufnehmer für die Sensoreinheit verwendet werden.

Unabhängig davon kann zudem die Messwertaufnahme ohne direkten Kontakt mit dem abgefüllten Produkt wünschenswert sein, um das Produkt nicht zu beeinträchtigen und die Sensoreinheit gegenüber äußeren Einflüssen zu schützen. So kann beispielsweise die Temperatur der inneren Deckschicht, der pH-Wert der inneren Deckschicht, das Vorhandensein einer Substanz in der inneren Deckschicht oder die Konzentration einer Substanz in der inneren Deckschicht gemessen werden, um eine belastbare Aussage über das abgefüllte Produkt zu erhalten. In diesem Zusammenhang bietet es sich an, wenn die zu messende Substanz vom Produkt in die innere Deckschicht hinein diffundieren kann.

Sensoreinheiten, die mit einem potentiometrischen Messverfahren arbeiten, erfordern eine Referenzelektrode, um ein konstantes Potential bereitzustellen, gegen welche das Elektrodenpotential der Messelektrode abgegriffen werden kann. Die häufigste Form der Referenzelektrode ist eine Silber-Silberchlorid- (Ag/AgCl) Elektrode. Referenzelektroden sind instabiler, je kleiner sie sind. Je nach Materialpaarung, insbesondere im Zusammenhang mit Chloriden, ist ihr Kontakt mit Lebensmitteln zudem unerwünscht. Es werden daher bevorzugt Pseudo-Referenzelektroden, etwa in Form einfacher Metalldrähte bzw. Metalloberflächen, eingesetzt, an denen sich ein konstantes aber unbekanntes Potential in einer Elektrolytlösung einstellt.

Das Messprinzip des Redoxcyclings kommt ohne Referenzelektrode aus. Hierbei wird durch wechselseitiges Beaufschlagen eines Potentials an zwei Elektroden in der Analytlösung, beispielsweise dem zu analysierenden Produkt, insbesondere Lebensmittel beziehungsweise einer Komponente oder eines Parameters des zu analysierenden Lebensmittels, ein messbarer Strom erzeugt, der abhängig von der Analytkonzentration durch Redoxreaktionen des Analyten an den Elektroden entsteht. In einer besonders einfachen Ausführungsform besteht ein dementsprechender Sensor aus genau zwei Elektroden. Es sind aber auch Mehrelektrodenanordnungen, auch unter Einbezug einer Referenzelektrode denkbar. Die Elektroden können dabei als einfache Metalldrähte oder ganz bzw. teilweise strukturierte, flächig ausgebrachte Elektrodenstrukturen ausgeführt sein. Hier lassen sich insbesondere durch die Verwendung von funktionalen Tinten in Kombination mit verschiedenen Drucktechniken kostengünstige Sensorstrukturen auf Foliensubstraten, insbesondere der Deckschicht, realisieren.

Im Falle eins Messaufnehmers als Temperaturfühler kommen aktive, die aufgrund des Messprinzips ein Signal erzeugen und daher keine Hilfsenergie für das Auslesen des Signals benötigen, und passive Temperaturfühler, wie etwa Widerstandsthermometer, in Frage, bei denen dies nicht der Fall ist. Der Messwiderstand ist vorzugsweise ein Metall, wie etwa Platin. Es können jedoch auch Messwiderstände aus Keramik, wie gesinterte Metalloxide oder Halbleiter, verwendet werden. Damit lassen sich höhere Empfindlichkeiten erzielen, teilweise jedoch zu Lasten der Genauigkeit. Sowohl Thermoelemente als auch Widerstandsthermometer lassen sich heute auf drucktechnischem Wege kostengünstig herstellen.

Messaufnehmer, die die Leitfähigkeit des abgefüllten Produkts aufnehmen, lassen einen Rückschluss auf die Konzentration und die Art der gelösten Ionen zu. Dies ist von Bedeutung, da die Leitfähigkeit von Lebensmitteln im genießbaren und ungenießbaren Zustand unterschiedlich ist. Der Messaufnehmer kann zwei zueinander parallel oder koaxial angeordnete Elektroden aufweisen, etwa aus Edelstahl, Graphit, Platin oder Titan, die eine definierte Fläche und einen definierten Abstand aufweisen. Hier kommen konduktive Messverfahren in Frage, die den ohmschen Wiederstand erfassen, oder auch induktive Verfahren, die potentialfrei arbeiten können. Einfache Elektrodenstrukturen zur Leitfähigkeitsmessung lassen sich auf drucktechnischem Wege kostengünstig herstellen.

Messaufnehmer, die den Sauerstoffgehalt erfassen, lassen insbesondere Rückschlüsse auf die Qualität von Lebensmitteln zu, da Sauerstoff die Haltbarkeit von Lebensmitteln beeinträchtigt. Zudem ändert sich oft der pH-Wert, wenn ein Lebensmittel verdirbt, so dass die den pH-Wert aufnehmende Messaufnehmer bevorzugt sein können. Der pH-Wert lässt sich beispielsweise über eine potentiometrische Messkette (Potentiometrie) erfassen, wobei die Potentialdifferenz gegenüber einer Bezugselektrode, auch Referenzelektrode genannt, erfasst wird. Die Bezugs- oder Referenzmethode kann dann ein konstantes Potential bereitstellen. Zur pH-Wertmessung können beispielsweise ionensensitive Feldeffekttransistoren (ISFET) oder EIS- (Electrolyte Insulator Semiconductor) Sensoren verwendet werden. Beim ISFET handelt es sich um eine Sonderform des Feldeffekttransistors, bei dem der Gatekontakt durch ein ionen- bzw. pH-sensitives Material ersetzt wird (z.B. SiOz, Al₂O₃ oder Ta₂O₅). Der EIS Sensor gleicht im Prinzip einer Metall-Isolator-Halbleiter-Struktur, wobei der Metallkontakt durch den Messelektrolyten und die Referenzelektrode und der Isolator durch eine ionensensitive Schicht (z.B. SiO₂, Al₂O₃ oder TazOs) ersetzt werden. Ein Vorteil dieser Ausführungsformen liegt u.a. in der Möglichkeit zur Miniaturisierung.

Die Transpondereinheit kann einerseits wenigstens eine Antenneneinheit und andererseits wenigstens eine Chipeinheit und/oder wenigstens eine Sensoreinheit umfassen. Bei der Transpondereinheit handelt es sich der Einfachheit halber vorzugsweise um einen sogenannten RFID-Transponder oder einen sogenannten NFC-Tag, die als solche hinreichend bekannt sind. Andere Transponder zum Speichern und berührungslosen Übertragen von Informationen sind jedoch ebenfalls denkbar.

Um das in der Packung enthaltende Produkt haltbarer zu machen, ist zwischen der Trägerschicht und einer Deckschicht wenigstens eine Barriereschicht vorgesehen, die als Barriere gegenüber Licht und Gasen wirkt. Man kann die Barriereschicht daher auch als Gasbarriere, vorzugsweise als Sauerstoffbarriere, beschreiben. Sauerstoff ist hier von besonderer Bedeutung, da in die Packung eindringender Sauerstoff die Haltbarkeit von Lebensmitteln stark herabsetzen kann. Im Sinne einer Barriereschicht ist jedoch nicht zwingend eine Undurchlässigkeit anzusehen. Eine Diffusion von Gasen durch die Barriereschicht ist kaum vollständig zu verhindern, da die Barriereschicht meist aus Kostengründen sehr dünn ausfallen wird. Als Barriereschicht kann insbesondere eine solche Schicht angesehen werden, die gegenüber den übrigen Schichten die Durchlässigkeit maßgeblich bestimmt. Die übrigen Schichten tragen zur entsprechenden Dichtheit nur unwesentlich bei. Alternativ oder zusätzlich kann eine Barriereschicht eine Sauerstoffdurchlässigkeit von kleiner 10 cm³ / m² d bar und/oder eine Wasserdampfdurchlässigkeit von kleiner 10 g/ m² d bar aufweist, wobei d für die Zeiteinheit Tag steht.

Das wenigstens eine Funktionselement ist zwischen der Barriereschicht und der Trägerschicht vorgesehen. Zusätzlich kann wenigstens ein Funktionselement zwischen der Barriereschicht und der auf derselben Seite der Trägerschicht angeordneten Deckschicht vorgesehen sein. Die Anordnung zwischen der Barriereschicht und der Trägerschicht bietet sich insbesondere für die Chipeinheit und/oder die Antenneneinheit an, da hier ein Auslesen der gespeicherten Information nicht durch die Barriereschicht behindert wird. Die Barriereschicht ist nämlich bevorzugt auf der Innenseite der Packung bezogen auf die Trägerschicht vorgesehen. Die Anordnung zwischen der Barriereschicht und der auf derselben Seite der Trägerschicht angeordneten Deckschicht bietet sich insbesondere für die Sensoreinheit an, da hier die Barriereschicht die Wechselwirkung mit der zu erfassenden Messgröße nicht behindert. Insbesondere im Falle einer Sensoreinheit kann es zudem bevorzugt sein, wenn wenigstens ein Funktionselement in der auf derselben Seite der Trägerschicht angeordneten Deckschicht vorgesehen ist. So kann das Funktionselement auf einfache Weise bereits in der Deckschicht vorkonfektioniert werden. Zudem kann das Funktionselement so nahezu oder sogar direkt in Kontakt mit dem Produkt der Packung gebracht werden, um Informationen betreffend des Zustands des Produkts auslesen zu können. Der Produktzustand kann so zuverlässig Zustandsänderungen des wenigstens einen Funktionselements bewirken. Alternativ oder zusätzlich kann das Funktionselement, etwa in Form einer Sensoreinheit sehr nahe an dem in der Packung enthaltenen Produkt angeordnet sein.

Hinzukommt, dass einzelne Funktionselemente auch auf unterschiedlichen Seiten der Barriereschicht vorgesehen sein können. Etwa kann die Sensoreinheit auf der Seite der angrenzenden Deckschicht bezogen auf die Barriereschicht vorgesehen sein, um den Messwert einfach aufnehmen zu können. Die Chipeinheit kann auf derselben Seite der Barriereschicht vorgesehen sein, um den Messwert einfach und zuverlässig speichern zu können. Die Chipeinheit kann aber auch auf der anderen Seite der Barriereschicht vorgesehen sein, um die gewünschte Information leicht und zuverlässig auslesen zu können. Die Antenneneinheit ist dann vorzugsweise auf der anderen Seite der Barriereschicht als die Sensoreinheit angeordnet, um die gewünschte Information leicht und zuverlässig auslesen zu können.

Als Trägerschicht kann jedes dem Fachmann für diesen Zweck als geeignet bekanntes Material eingesetzt werden, welches eine ausreichende Festigkeit und Steifigkeit, insbesondere Biegesteifigkeit, aufweist, um dem Behälter soweit Stabilität zu geben, dass der Behälter im gefüllten Zustand seine Form im Wesentlichen beibehält. Die Trägerschicht ist aus Kostengründen, aus Gewichtsgründen und aus Gründen der Biegesteifigkeit aus einem zellulosehaltigen Fasermaterial, vorzugsweise aus Papier oder Karton gebildet. Das Flächengewicht der Trägerschicht liegt vorzugsweise in einem Bereich von 120 bis 450 g/m², besonders bevorzugt in einem Bereich von 130 bis 400 g/m² und am meisten bevorzugt in einem Bereich von 150 bis 380 g/m². Ein bevorzugter Karton weist in der Regel einen ein- oder mehrschichtigen Aufbau auf und kann ein- oder beidseitig mit einer oder auch mehreren Deckschichten beschichtet sein. Weiterhin besitzt ein bevorzugter Karton eine Restfeuchtigkeit von weniger als 20 Gew.-%, bevorzugt von 2 bis 15 Gew.-% und besonders bevorzugt von 4 bis 10 Gew.-% bezogen auf das Gesamtgewicht des Kartons. Ein besonders bevorzugter Karton weist einen mehrschichtigen Aufbau auf. Weiterhin bevorzugt besitzt der Karton auf der zur Umgebung hin weisenden Oberfläche mindestens eine, besonders bevorzugt jedoch mindestens zwei Lagen einer Deckschicht, die dem Fachmann als "Strich" bekannt ist. Als "Strich" werden in der Papierherstellung meist anorganische Feststoffpartikel beinhaltende flüssige Phasen, vorzugsweise kreide-, gips- oder tonhaltige Lösungen, bezeichnet, welche auf die Oberfläche des Karton aufgebracht werden. Weiterhin besitzt ein bevorzugter Karton einen Scott-Bond Wert in einem Bereich von 100 bis 360 J/m², bevorzugt von 120 bis 350 J/m² und insbesondere bevorzugt von 135 bis 310 J/m². Durch die vorstehend genannten Bereiche gelingt es, einen Verbund bereitzustellen, aus dem sich ein Behälter mit hoher Dichtigkeit, leicht und in geringen Toleranzen falten lässt.

Die Deckschichten sind dagegen der Siegelbarkeit halber aus einem thermoplastischen Kunststoff gebildet, wobei sich aus Kostengründen und der Verarbeitbarkeit ein Polyolefin, insbesondere Polyethylen, anbietet.

Die Barriereschicht kann aus Gründen der Diffusionsdichtheit aus Metall und/oder einem Metalloxid gebildet sein, wobei sich aus Gewichtsgründen und der Verarbeitbarkeit wegen Aluminium, Eisen oder Kupfer anbietet. Als Barriereschichten kommen aber alternativ oder zusätzlich auch mineralische Barriereschichten, insbesondere in Form eines Oxids, wie etwa wenigstens eines Siliziumoxids oder Titanoxids. Alternativ oder zusätzlich kommen aber auch Barriereschichten aus wenigstens einem Kunststoff in Frage. Bei diesem kann es sich je nach der speziellen Anforderung beispielsweise um Polyamid (PA), Polyamid 6 (PA 6), Polyacrylnitril (PAN), Polyethylennaphthalat (PEN), Ethylen-Vinylalkohol-Copolymer (EVOH/EVAL), Polyvinylidenchlorid (PVDC) und/oder flüssigkristallines Polymer (liquid crystal polymer, LCP) handeln. Im Falle einer Metallschicht ist eine Dicke in einem Bereich von 3 bis 20 µm, bevorzugt in einem Bereich von 3,5 bis 12 µm und besonders bevorzugt in einem Bereich von 4 bis 10 µm, zweckmäßig. Die Reinheit des Aluminiums liegt vorzugsweise bei 97,5% und höher, vorzugsweise bei 98,5% und höher, jeweils bezogen auf die gesamte Aluminiumschicht. In einer besonderen Ausgestaltung, besteht die Metallschicht aus einer Aluminiumfolie. Geeignete Aluminiumfolien besitzen eine Dehnbarkeit von mehr als 1%, bevorzugt von mehr als 1,3% und besonders bevorzugt von mehr als 1,5%, und eine Zugfestigkeit von mehr als 30 N/mm², bevorzugt mehr als 40 N/mm² und besonders bevorzugt mehr als 50 N/mm². Geeignete Aluminiumfolien zeigen im Pipettentest eine Tropfengröße von mehr als 3 mm, bevorzugt mehr als 4 mm und besonders bevorzugt von mehr als 5 mm. Geeignete Legierungen zum Erstellen von Aluminiumschichten oder -folien sind unter den Bezeichnungen EN AW 1200, EN AW 8079 oder EN AW 8111 erhältlich.

Im Falle einer Metallfolie als Barriereschicht kann ein- und/oder beidseitig der Metallfolie eine Haftvermittlerschicht zwischen der Metallfolie und einer nächstgelegenen Polymerschicht vorgesehen sein. Gemäß einer besonderen Ausgestaltung des erfindungsgemäßen Behälters ist jedoch auf keiner Seite der Metallfolie, zwischen der Metallfolie und der nächstgelegenen Polymerschicht, eine Haftvermittlerschicht vorgesehen.

Weiterhin bevorzugt kann als Barriereschicht eine Metalloxidschicht sein. Als Metalloxidschichten kommen alle Metalloxidschichten in Betracht, die dem Fachmann geläufig sind und geeignet erscheinen, um eine Barrierewirkung gegenüber Licht, Dampf und/oder Gas zu erzielen. Insbesondere bevorzugt sind Metalloxidschichten basierend auf den schon zuvor genannten Metallen Aluminium, Eisen oder Kupfer, sowie solche Metalloxidschichten, die auf Titan- oder Siliziumoxidverbindungen basieren. Eine Metalloxidschicht wird beispielhaft durch Bedampfen einer Kunststoffschicht, beispielsweise eine orientierte Polypropylenfolie mit Metalloxid erzeugt. Ein bevorzugtes Verfahren hierfür ist die physikalische Gasphasenabscheidung.

Als Haftvermittler in der Haftvermittlerschicht kommen alle Kunststoffe in Betracht, die durch Funktionalisierung mittels geeigneter funktioneller Gruppen geeignet sind, durch das Ausbilden von Ionenbindungen oder kovalenten Bindungen zu der Oberfläche der jeweils anderen Schicht eine feste Verbindung zu erzeugen. Vorzugsweise handelt es sich um funktionalisierte Polyolefine, die durch CoPolymerisation von Ethylen mit Acrylsäuren wie Acrylsäure, Methacrylsäure, Crotonsäure, Acrylaten, Acrylatderivaten oder Doppelbindungen tragenden Carbonsäureanhydriden, beispielsweise Maleinsäureanhydrid, oder mindestens zwei davon, erhalten wurden. Hierunter sind Polyethylen-maleinsäureanhydrid-Pfropfpolymere (EMAH), Ethylen-Acrylsäure-Copolymere (EAA) oder Ethylen-Methacrylsäure-Copolymere (EMAA) bevorzugt, welche beispielsweise unter den Handelsbezeichnungen Bynel^{®} und Nucrel^{®} durch DuPont oder Escor^{®} durch ExxonMobile Chemicals vertrieben werden.

Ein bevorzugtes Polyolefin für wenigstens eine der Kunststoffschichten ist ein Polyethylen oder ein Polypropylen oder beides. Ein bevorzugtes Polyethylen ist eines ausgewählt ist aus der Gruppe bestehend aus einem LDPE, einem LLDPE, und einem HDPE, oder eine Kombination aus mindestens zwei davon. Ein weiteres bevorzugtes Polyolefin ist ein mPolyolefin.

Das wenigstens eine Funktionselement kann in wenigstens einer Kunststoffschicht des Packungslaminats aufgenommen sein, wobei es sich fertigungstechnisch besonders anbieten kann, wenn das Funktionselement wenigstens teilweise in die wenigstens eine Kunststoffschicht, vorzugsweise zwischen zwei Kunststoffschichten, eingeschweißt ist. Wahlweise kann das Funktionselement erst bei der Bildung des Packungslaminats, also wenigstens im Wesentlichen inline, in die wenigstens eine Kunststoffschicht eingebracht werden, die zudem bevorzugt ohnehin und nicht lediglich zum Zwecke des Aufnehmens des Funktionselements vorgesehen ist. So kann eine zusätzliche Schicht eingespart werden. Das wenigstens eine Funktionselement kann aber zur Vereinfachung der Herstellung und zur besseren Vorkonfektionierung bereits vorab in wenigstens eine Kunststoffschicht eingebracht bzw. eingeschweißt werden. Das Einschweißen geht besonders einfach und schnell, wenn das Funktionselement zwischen zwei Kunststofffolien eingeschweißt wird. Die wenigstens eine Kunststoffschicht kann dann bedarfsweise als Bandmaterial zur Herstellung des Packungslaminats herangezogen und zwischen anderen Schichten des Packungslaminats vorgesehen werden. Dann sind zudem vorzugsweise Funktionselemente in regelmäßigen Abständen vorgesehen, um aus dem Packungslaminat hinterher gleichartige Packungen herstellen zu können. Die wenigstens eine Kunststoffschicht muss jedoch nicht als Bahnmaterial in das Packungslaminat aufgenommen werden. Es ist auch denkbar, dass zunächst einzelne Abschnitte der wenigstens einen Kunststoffschicht abgeschnitten werden, die dann an vorgegebenen Stellen im Packungslaminat vorgesehen werden, etwa um Material einzusparen. Die Kunststoffschicht erstreckt sich dann nicht durchgängig entlang des gesamten Packungslaminats, sondern ist nur abschnittsweise vorgesehen.

Somit kann grundsätzlich das wenigstens eine Funktionselement in einer separaten, lediglich bereichsweise vorgesehenen Hülle, vorzugsweise aus Kunststoff, zwischen den angrenzenden Schichten des Packungslaminats aufgenommen sein. Dies vereinfacht die exakte Positionierung des Funktionselements und erhöht die Flexibilität bei der Herstellung des Packungslaminats. Um das wenigstens eine Funktionselement, etwa in seiner separaten Hülle, einfach und dauerhaft im Packungslaminat zu fixieren, kann das Funktionselement oder die dieses umgebende Hülle, im Packungslaminat eingeschweißt sein. Alternativ oder zusätzlich kann das wenigstens eine Funktionselement, das in einer separaten, lediglich bereichsweise vorgesehenen Hülle aufgenommen oder eingeschweißt sein kann, mit der Trägerschicht verklebt sein. Dies schützt das Funktionselement und erleichtert die Verarbeitbarkeit. Das Verkleben selbst kann vereinfacht werden, wenn hierzu ein Klebstoff verwendet wird. Des Weiteren ist es, wie bereits ausgeführt worden ist, besonders zweckmäßig, wenn die bedarfsweise vorgesehene separate Hülle aus Kunststoff gebildet ist. Besonders kostensparend kann es sein, wenn das wenigstens eine Funktionselement auf wenigstens eine Schicht des Packungslaminats aufgedruckt ist. Die aufgedruckten Elemente weisen dann vorzugsweise leitende Partikel auf.

Um ein Delaminieren entlang der Trägerschicht zu vermeiden, kann es zweckmäßig sein, die Barriereschicht mit wenigstens einer angrenzenden Schicht über eine Klebstoffschicht zu verkleben. Da insbesondere metallische Barriereschichten regelmäßig nicht zufriedenstellend an den Trägerschichten haften, bietet es sich oftmals in besonderer Weise an, die Trägerschicht mit der Barriereschicht über eine Klebstoffschicht zu verkleben. Die Klebstoffschicht kann dann in bevorzugter Weise genutzt werden, um das wenigstens eine Funktionselement wenigstens teilweise in der Klebstoffschicht aufzunehmen. So ist das Funktionselement wenigstens teilweise sicher und dauerhaft in das Laminat integriert. Außerdem erlaubt der Klebstoff einen Dickenausgleich des Laminats im Bereich des Funktionselements, weshalb die Klebstoffschicht auch dann bevorzugt sein kann, wenn sie zur Verbindung der angrenzenden Schichten nicht benötigt wird. An der Stelle des Funktionselements wird bedarfsweise weniger Klebstoff vorgesehen als in angrenzenden Bereichen, um eine gleichmäßige Schichtdicke der das Funktionselement integrierenden Klebstoffschicht bereitzustellen.

Um Spannungsspitzen an Kanten zu vermindern, die zu einem Delaminieren des Packungslaminats beitragen können, könnten die Zuschnitte der Hüllen auch noch abgerundet oder gleich abgerundet aus dem Bahnmaterial herausgestanzt werden. Dabei kommt eine umlaufende Abrundung entlang einer Kante der zugeschnittenen Hüllen und/oder eine Abrundung der Kanten der zugeschnittenen Hüllen in einer Richtung senkrecht zum Zuschnitt in Frage. Man spricht dabei auch von einem zweidimensionalen oder dreidimensionalen Verrunden, je nachdem in welcher Ebene die Rundungen angeordnet sind. Je ausgeprägter die wenigstens eine Abrundung ausfällt, desto geringer sind die Spannungsspitzen und die Tendenz des Delaminierens.

Damit das Packungslaminat keine ungleichmäßige Dicke aufweist und gegebenenfalls um das wenigstens eine Funktionselement besser zu schützen, kann das wenigstens eine Funktionselement wenigstens teilweise in eine bereichsweise vorgesehene Aussparung der Trägerschicht aufgenommen werden. Es wird also zunächst eine Aussparung bereitgestellt, in die das wenigstens eine Funktionselement leicht wenigstens teilweise eingebracht werden kann. Dabei ist es grundsätzlich weniger von Bedeutung, ob die Funktionselemente einzeln und separat oder als Teil eines Bahnmaterials im Packungslaminat appliziert werden. Um einfach, schnell und zuverlässig eine hinreichende Aussparung in der Trägerschicht bereitstellen zu können, kann die Trägerschicht beispielsweise durchgehend in Längsrichtung des Packungslaminats oder in regelmäßigen Abständen komprimiert werden. Diese Kompression wird einfach und zuverlässig durch Pressen der Trägerschicht mit geeigneten Presswerkzeugen erreicht. Die faserhaltige Trägerschicht ist dazu komprimierbar und so vorgesehen, dass die einmal erfolgte Komprimierung der Trägerschicht über einen hinreichend langen Zeitraum beibehalten bleibt, um das wenigstens eine Funktionselement applizieren zu können. Anstelle oder zusätzlich zu einer entsprechenden Kompression kommt aber auch ein Materialabtrag aus der Trägerschicht in Frage. Dort, wo Material der Trägerschicht entfernt worden ist, kann anschließend problemlos das wenigstens eine Funktionselement vorgesehen werden. Ein eher umfangreicherer Materialabtrag kann einfach und schnell zudem bedarfsweise durch ein Ausstanzen eines Teils der Trägerschicht bereitgestellt werden.

Um Packungen zweckmäßig mit dem wenigstens einen Funktionselement versehen zu können und zugleich die Packungen einfach fertigen zu können, bietet es sich an, einen Packungszuschnitt aus einem Packungslaminat nach einem der Ansprüche 1 bis 8 herzustellen.

Zudem kann es sich aus denselben Gründen anbieten, einen Packungsmantel aus einem Packungslaminat nach einem der Ansprüche 1 bis 8 und/oder aus einem Packungszuschnitt nach Anspruch 8 herzustellen, wobei der Packungszuschnitt an gegenüberliegenden Rändern verbunden, vorzugsweise verschweißt oder verklebt, ist und insbesondere den Packungsmantel bildet.

Dementsprechend wird eine bevorzugte Packung aus funktionaler und fertigungstechnischer Hinsicht erhalten, wenn die Packung aus einem Packungslaminat nach einem der Ansprüche 1 bis 8 und vorzugsweise aus einem Packungsmantel nach Anspruch 10 hergestellt ist. Die Packung weist dabei zudem zur besseren Handhabbarkeit einen Packungskopf, einen Packungsboden und einen Mantelabschnitt auf, wobei der Packungskopf, der Packungsboden und der Mantelabschnitt flüssigkeitsdicht verschlossen, insbesondere gesiegelt, sind.

Bei einer ersten besonders bevorzugten Ausgestaltung des Verfahrens werden Funktionselemente in Form von Chipeinheiten, Antenneneinheiten, Sensoreinheiten und/oder Transpondereinheiten verwendet, wie diese bereits zuvor hinreichend im Zusammenhang mit dem Packungslaminat beschrieben worden sind.

Zwischen der Trägerschicht und einer Deckschicht ist wenigstens eine als Gasbarriere, vorzugsweise als Sauerstoffbarriere, ausgebildete Barriereschicht vorgesehen, um eine Barriere gegenüber Licht oder bestimmten Gasen zu schaffen, das bzw. die nicht oder nur sehr reduziert bis in das Innere der Packung und damit zum dem in der Packung enthaltenen Produkt gelangen sollen. Die Barriereschicht kann dazu als Bahnmaterial herangeführt und im Packungslaminat vorgesehen werden. So kann eine Vorkonfektionierung und Vereinfachung des Herstellungsverfahrens erreicht werden. Es kann die Barriereschicht aber bedarfsweise auch bei der Herstellung des Packungslaminats erzeugt werden. Je nach dem verwendeten Material kommt hierzu eine Extrusion, ein Aufdampfen und/oder ein Sputtern in Frage.

Zudem ist wenigstens ein Funktionselement, vorzugsweise in regelmäßigen Abständen, zwischen der Barriereschicht und der Trägerschicht angeordnet. So kann die gewünschte Information zuverlässig ausgelesen werden, insbesondere wenn das wenigstens eine Funktionselement eine Antenneneinheit und/oder eine Chipeinheit ist. Es wird so beispielsweise vermieden, dass die Barriereschicht das Auslesen stört. Alternativ oder zusätzlich kann das wenigstens eine Funktionselement, vorzugsweise in regelmäßigen Abständen, zwischen der Barriereschicht und der auf derselben Seite der Trägerschicht angeordneten Deckschicht vorgesehen werden. Dies bietet sich insbesondere für die Sensoreinheit und/oder die Chipeinheit an, wenn Informationen betreffend den Zustand des in der Packung enthaltenen Produkts ausgelesen werden sollen. Diese können so nahe an das Produkt gebracht werden, so dass eine Zustandsänderung des Produkts eine Zustandsänderung der Sensoreinheit und/oder Chipeinheit indizieren kann. Letzteres gilt in besonderem Maße, wenn wenigstens ein Funktionselement, vorzugsweise in regelmäßigen Abständen, in der auf derselben Seite der Trägerschicht angeordneten Deckschicht vorgesehen wird. Das Funktionselement kann so nahezu oder sogar direkt in Kontakt mit dem Produkt der Packung gebracht werden.

Auch verfahrensmäßig kann die wenigstens eine Trägerschicht, die wenigstens eine Deckschicht, die wenigstens eine Barriereschicht aus den zuvor bereits im Zusammenhang mit dem Packungslaminat beschriebenen Materialien gebildet werden, wobei es verfahrensmäßig zu einer Vereinfachung führt, wenn die Trägerschicht als Bahnmaterial zugeführt und in das Packungslaminat integriert wird. Die Deckschichten und die Barriereschichten können, soweit diese aus wenigstens einem thermoplastischen Kunststoff gebildet werden, auch erst inline mit der Packungslaminatherstellung, etwa im Wege der Extrusion, hergestellt werden. Bei metallischen Barriereschichten, insbesondere Barriereschichten aus Aluminium, kann es sich aus Kostengründen und zur Einsparung von Material anbieten, die Barriereschicht auf eine Substratschicht des Packungslaminats aufzudampfen oder zu sputtern. Andernfalls kann bedarfsweise eine Aluminium- oder Metallfolie als Barriereschicht verwendet werden.

Zum einfachen Anbringen und zum Schutz des wenigstens einen Funktionselements, kann dieses in wenigstens eine Kunststoffschicht aufgenommen oder eingeschweißt werden, wobei sich ein Einschweißen insbesondere zwischen zwei Kunststoffschichten anbietet, um das Herstellungsverfahren zu vereinfachen. Ergänzend kann das in die wenigstens eine Kunststoffschicht eingebrachte Funktionselement mit wenigstens einer weiteren Schicht des Packungslaminats verbunden werden, um das Funktionselement im Packungslaminat zu fixieren. Dabei kann die wenigstens eine Kunststoffschicht als Bahnmaterial zugeführt werden und als eine durchgehende Schicht in das Packungslaminat integriert werden. Das vereinfacht und vergleichmäßigt den Aufbau des Packungslaminats. Es kann aber zur Einsparung von Material auch das Bahnmaterial nur als ein bereichsweise vorgesehener Materialstreifen, insbesondere der Länge nach, in das Packungslaminat eingesetzt werden. In beiden Fällen, können die Abstände der Funktionselemente in der wenigstens einen Kunststoffschicht so vorkonfektioniert werden, dass die Abstände der Funktionselemente im späteren Packungslaminat durch das Einbringen der Kunststoffschicht der Länge nach so vorgesehen sind, dass sich aus dem Packungslaminat einfach eine ganze Reihe von gleichförmigen Packungen fertigen lässt. Andernfalls kann eine Kunststoffschicht mit einer Reihe von Funktionselementen als Bahnmaterial vorkonfektioniert werden, von dem dann die Funktionselemente der Reihe nach abgeschnitten und in der entsprechenden Hülle aus Kunststoff aufgenommen mit wenigstens einer Schicht des Packungslaminats verbunden werden. Das Anbringen der Funktionselemente erfolgt dann vorzugsweise in regelmäßigen Abständen, die es einfach erlauben, aus dem Packungslaminat eine ganze Reihe von gleichförmigen Packungen zu fertigen.

Grundsätzlich können die Funktionselemente auch in einer Hülle aus einem anderen Material als Kunststoff aufgenommen sein, was aber wohl nur für besondere Anwendungen bevorzugt sein wird. Unabhängig von der Ausgestaltung der Hülle kann diese mit wenigstens einer anderen Schicht des Packungslaminats verklebt werden, sei es unter Verwendung eines Klebstoffs oder ohne. Grundsätzlich kann aber auch über das wenigstens eine Funktionselement oder die entsprechende, das Funktionselement umschließende Hülle eine Kunststoffschicht laminiert werden. Dies kann zu einem zusätzlichen Materialbedarf führen, wenn die Kunststoffschicht nur der Montage des Funktionselements dient. Allerdings kann dies schnell, zuverlässig und einfach erfolgen, was zu einer Kostensenkung bei der Packungslaminatfertigung beitragen kann.

Unter bestimmten Bedingungen kann es bevorzugt sein, die Funktionselemente in regelmäßigen Abständen, bedarfsweise in einer Hülle der bereits beschriebenen Art, mit einer Deckschicht oder einer anderen Schicht, wie insbesondere der Trägerschicht, zu verbinden. Ersteres erlaubt eine einfache Verbindung, bedarfsweise ohne einen zusätzlichen Klebstoff. Letzteres schützt und stützt das Funktionselement, auch wenn bedarfsweise ein zusätzlicher Klebstoff für die Verbindung erforderlich ist. Dabei kann unabhängig von der Schicht des Packungslaminats, mit dem das Funktionselement verbunden wird, der Einfachheit halber ein Verkleben als Fügeart gewählt werden.

Um die Kosten für die Herstellung der Funktionselemente zu verringern, auch wenn dies die Herstellung der Packungslaminate verlangsamen und erschweren kann, bietet es sich an, das wenigstens eine Funktionselement auf wenigstens eine Schicht des Packungslaminats aufzudrucken. Da die Trägerschicht eine hohe Biegesteifigkeit bereitstellt, die sich vorteilhaft auf die Haltbarkeit der aufgedruckten Funktionselemente beim weiteren Handling der Trägerschicht bzw. des Packungslaminats auswirken kann, ist es zweckmäßig, die Funktionselemente auf die Trägerschicht zu drucken. Je nach Trägerschicht kann deren Material das Aufdrucken jedoch erschweren. Einfach und zuverlässig kann das Aufdrucken dagegen auf eine glatte Oberfläche erfolgen, weshalb es besonders zweckmäßig sein kann, die Funktionselemente auf eine Kunststoffschicht zu drucken, die auf die Trägerschicht aufgebacht wird oder aufgebacht worden ist. Vorzugsweise wird das Funktionselement auf die Trägerschicht oder eine Kunststoffschicht des Packungslaminats aufgedruckt. Hierzu kommen gängige Druckverfahren wie Flexo-, Sieb-, Tief- oder Digitaldruckverfahren in Frage. Ferner sollten die Druckfarben leitfähige, insbesondere metallische Partikel enthalten, um die Funktionselemente, insbesondere integrierte Schaltung bereitstellen zu können. Das Drucken der Funktionselemente kann im Wege der Vorkonfektionierung oder inline bei der Herstellung des Packungslaminats auf einer der Schichten des Packungslaminats erfolgen.

Die Funktionselemente können vor äußerer Beeinträchtigung geschützt bzw. das Packungslaminat kann dünner und materialschonender ausgebildet werden, wenn in der Trägerschicht bereichsweise, vorzugsweise in regelmäßigen Abständen, wenigstens eine Aussparung vorgesehen wird. Dann kann das wenigstens eine Funktionselement wenigstens teilweise in der wenigstens einen Aussparung vorgesehen werden. Die Aussparung ihrerseits kann durch ein Pressen und Komprimieren der Trägerschicht, durch einen Materialabtrag der Trägerschicht, durch ein Ausstanzen wenigstens eines Teils der Trägerschicht oder auf andere Weise gebildet werden. Das wenigstens eine Funktionselement kann einfach und kostengünstig wenigstens teilweise in der wenigstens einen Aussparung in der Trägerschicht aufgenommen werden, indem das Funktionselement mit der Trägerschicht verklebt oder indem auf der Trägerschicht eine weitere, die Aussparung überdeckende Schicht vorgesehen wird. Wird die Trägerschicht lokal ganz entfernt, kann das Funktionselement mit der angrenzenden Materialschicht des Packungslaminats verbunden, insbesondere verklebt, werden.

Um verfahrensmäßig Packungszuschnitte der bereits beschriebenen Art unter Ausnutzung der bereits im Zusammenhang mit dem Packungslaminat diskutierten Vorteile herstellen zu können, bietet es sich an, ein Packungslaminat nach einem der Ansprüche 1 bis 5 herzustellen und anschließend einen Teil des Packungslaminats abzutrennen. Dabei bietet es sich der Einfachheit halber an, wenn aus dem zunächst hergestellten Packungslaminat der Länge nach eine ganze Reihe von, insbesondere gleichartigen, Packungszuschnitten herausgeschnitten wird.

Die für das Packungslaminat bereits diskutierten Vorteile können zudem verfahrensmäßig auch für die Herstellung eines Packungsmantels genutzt werden, wenn zunächst ein Packungslaminat nach einem der Ansprüche 1 bis 5 oder ein Packungszuschnitt nach Anspruch 18 hergestellt wird und gegenüberliegende Ränder des Packungslaminats oder des Packungszuschnitts miteinander verbunden, vorzugsweise miteinander verschweißt oder verklebt, werden. Vorzugsweise wird so eine Längsnaht eines Packungsmantels gebildet, dessen Längsseiten dann noch offen sind. Die Längsnaht oder die entsprechende Verbindung der gegenüberliegenden Ränder des Packungslaminats und/oder des Zuschnitts kann bedarfsweise auch unter Verwendung eines Klebstreifens erreicht werden. Der Klebestreifen kann dabei einfach zwischen die einander überlappenden Ränder und/oder um wenigstens einen Rand herumgelegt werden.

Die verfahrensmäßigen Vorteile der Packungslaminatherstellung können aber alternativ oder zusätzlich auch für die Herstellung einer Packung genutzt werden, wenn zunächst ein Packungslaminat nach einem der Ansprüche 11 bis 16 oder ein Packungszuschnitt nach Anspruch 18 und anschließend ein Packungskopf, ein Packungsboden und ein Mantelabschnitt hergestellt wird. Damit kein abzufüllendes Produkt versehentlich aus der Packung austreten kann, bietet es sich weiter an, den Packungskopf, den Packungsboden und den Mantelabschnitt flüssigkeitsdicht zu verschließen, insbesondere zu siegeln.

Hinsichtlich des Aufbaus des Packungslaminats ist grundsätzlich festzustellen, dass die genannten Schichten grundsätzlich direkt oder indirekt miteinander verbunden sein können, wenn dies nicht anders angegeben ist. Zudem kann auch bei einer direkten Verbindung ein Haftvermittler oder ein Klebstoff zwischen den direkt miteinander verbundenen Schichten genutzt werden. Des Weiteren können die Schichten aus den angegebenen Materialien vollständig bestehen oder aber ergänzende Stoffe enthalten, wie Füllstoffe oder Additive. In Frage kommen beispielsweise organische oder anorganische Substanzen, Farbstoffe, Ruß und Metalloxide.

Nachträglich wird die Erfindung anhand einer lediglich Ausführungsbeispiele darstellenden Zeichnung näher erläutert. In der Zeichnung zeigt
- Fig. 1: einen grundsätzlichen Aufbau eines Packungslaminats in einer schematischen Seitenansicht,
- Fig. 2: eine grundsätzliche Fertigung des Packungslaminats in einer schematischen Seitenansicht,
- Fig. 3: eine grundsätzliche Fertigung von Packungszuschnitten, Packungsrohlingen und Packungen aus einem Packungslaminat,
- Fig. 4: eine grundsätzliche Ausgestaltung einer Transpondereinheit in einer schematischen Draufsicht,
- Fig. 5: eine in einer Hülle aufgenommene Transpondereinheit in einer schematischen Seitenansicht,
- Fig. 6: eine Reihe von in einem Bahnmaterial vorkonfektionierter Transpondereinheiten in einer schematischen Draufsicht,
- Fig. 7: eine Reihe von in einem alternativen Bahnmaterial vorkonfektionierter Transpondereinheiten in einer schematischen Draufsicht,
- Fig. 8: ein erstes erfindungsgemäßes Packungslaminat in einer schematischen Seitenansicht,
- Fig. 9: ein zweites erfindungsgemäßes Packungslaminat in einer schematischen Seitenansicht,
- Fig. 10: ein drittes erfindungsgemäßes Packungslaminat in einer schematischen Seitenansicht,
- Fig. 11: ein viertes erfindungsgemäßes Packungslaminat in einer schematischen Seitenansicht und
- Fig. 12: ein fünftes erfindungsgemäßes Packungslaminat in einer schematischen Seitenansicht.

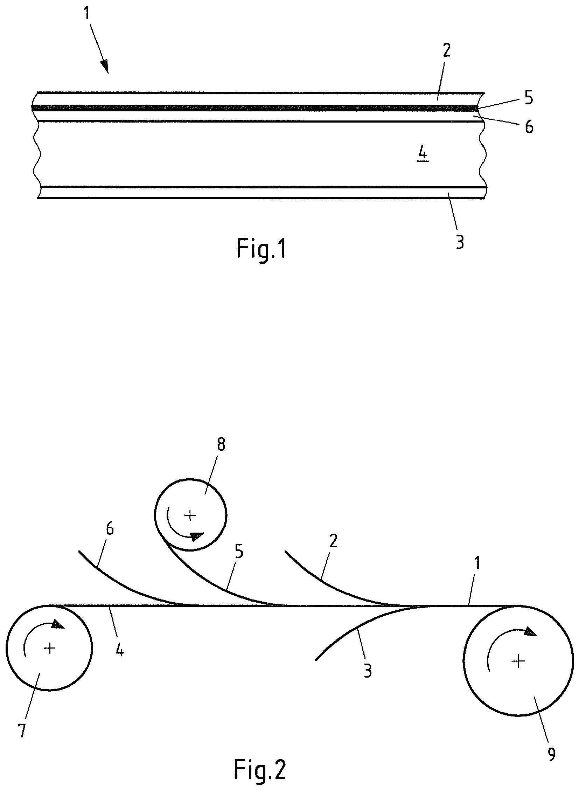

In der Fig. 1 ist ein beispielhafter grundsätzlicher Aufbau eines Packungslaminats 1 in einer schematischen Seitenansicht dargestellt. Es kommen zwar grundsätzlich auch andere Aufbauten von Packungslaminaten 1 in Frage, der dargestellte Aufbau findet in der Praxis aber vielfach Anwendung. Das Packungslaminat 1 umfasst bei dem dargestellten und insoweit bevorzugten Ausführungsbeispiel zwei äußere Deckschichten 2,3, eine dazwischen vorgesehene Trägerschicht 4 sowie eine Barriereschicht 5. Bei der Trägerschicht 4 handelt es sich um eine faserhaltige Schicht aus Karton, während es sich bei der Barriereschicht 5 um eine Aluminiumschicht handelt, die meist nur indirekt mit der Trägerschicht 4 verbunden werden kann, um ein unerwünschtes Delaminieren zu vermeiden. Daher ist zwischen der Trägerschicht 4 und der Barriereschicht 5 noch eine Kunststoffschicht in Form einer Verbindungsschicht 6 vorgesehen, die die Trägerschicht 4 mit der Barriereschicht 5 verbindet. Bei dem dargestellten und insoweit bevorzugten Packungslaminat 1 sind die Deckschichten 2,3 und die zwischen der Trägerschicht 4 und der Barriereschicht 5 vorgesehene Verbindungsschicht 6 aus Polyethylen (PE) gebildet. Die an die Barriereschicht 5 angrenzende Deckschicht 2 bildet in der Packung die dem abgefüllten Produkt zugeordnete innere Schicht, während die von der Barriereschicht 5 abgewandte Deckschicht 3 die dem abgefüllten Produkt abgewandte äußere Schicht der Packung bildet, die regelmäßig mit einem Design und/oder Produktinformationen bedruckt sein wird. Der entsprechende Aufdruck wird vorliegend der Einfachheit halber nicht als weitere Schicht des Packungslaminats 1 verstanden, sondern als Teil der Deckschicht 3 angesehen.

In der Fig. 2 ist die Fertigung des Packungslaminats 1 aus der Fig. 1 schematisch dargestellt. Die Trägerschicht 4 wird als Bahnmaterial auf einer Rolle 7 aufgewickelt herantransportiert und sodann abgewickelt. Zu beiden Seiten der Trägerschicht 4 wird im Wege der Extrusion eine Kunststofffolie aus Polyethylen erzeugt, die eine Deckschicht 2 und die Verbindungsschicht 6 zur Verbindung von Trägerschicht 4 und Barriereschicht 5 bildet. Bevor die Kunststofffolien abgekühlt sind, werden sie mit gegenüberliegenden Seiten der Trägerschicht 4 verbunden. Parallel dazu wird die Barriereschicht 5 in Form einer Aluminiumfolie von einer Rolle 8 abgewickelt und mit der Verbindungsschicht 6 zur Verbindung von Trägerschicht 4 und Barriereschicht 5 verbunden. Auf die äußere Seite der Barriereschicht 5 wird die Deckschicht 3 in Form einer weiteren Kunststofffolie aufgebracht, die ebenfalls inline im Wege der Extrusion erzeugt wird. Die Barriereschicht 5 kann bedarfsweise auch auf die Verbindung von Trägerschicht 4 und Barriereschicht 5 aufgedampft werden, soweit es sich bei der Barriereschicht 5 um Aluminium handelt. Nachdem die einzelnen Lagen des Packungslaminats 1 miteinander verbunden sind, kann das Packungslaminat 1 für die spätere Verwendung auf eine Rolle 9 aufgewickelt werden.

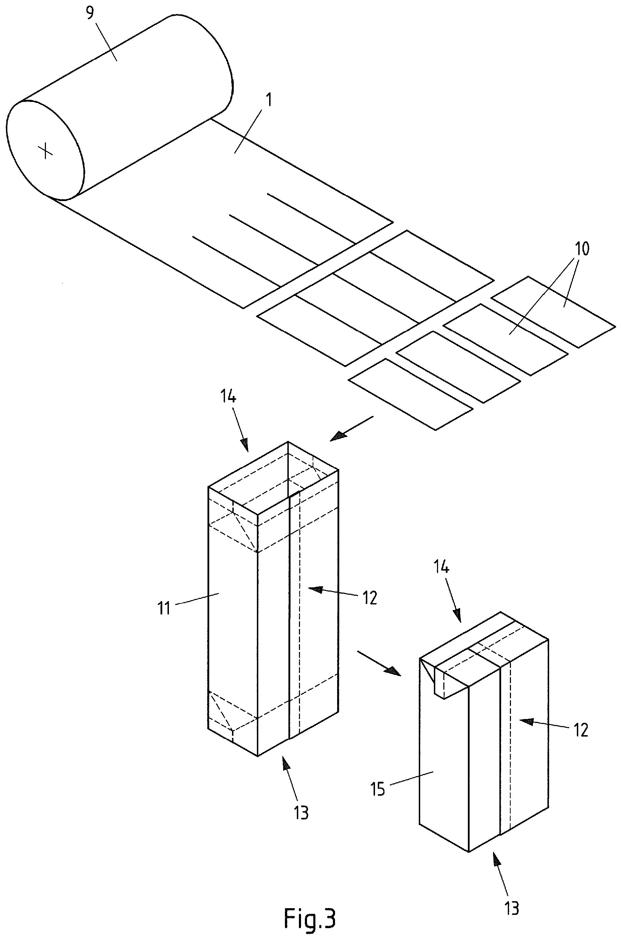

In der Fig. 3 ist eine mögliche Fertigung von Packungszuschnitten 10, Packungsmänteln 11 und Packungen 12 aus einem Packungslaminat 1 beschrieben. Das Packungslaminat 1 wird als Bahnmaterial bereitgestellt und von einer Rolle 9 abgerollt. Sodann wird das Packungsmaterial 1 im dargestellten Beispiel zunächst in regelmäßigen Abständen längs und anschließend in regelmäßigen Abständen quer geschnitten, um auf diese Weise eine Vielzahl von Packungszuschnitten 10 zu erhalten, aus denen dann jeweils durch Falten, Umlegen und Siegeln der gegenüberliegenden Ränder ein Packungsmantel 11 mit einer Längsnaht 12 gebildet werden kann. Die Packungsmäntel 11 sind an ihren Längsseiten 13,14 zunächst offen. Anschließend kann eine Längsseite 13 geschlossen und der so erhaltene Verpackungsrohling mit einem Produkt gefüllt werden. Danach kann auch die andere Längsseite 14 verschlossen werden, so dass eine Packung 15 umfassend die aus dem Packungslaminat 1 gebildete Verpackung und das darin abgefüllte Produkt erhalten wird.

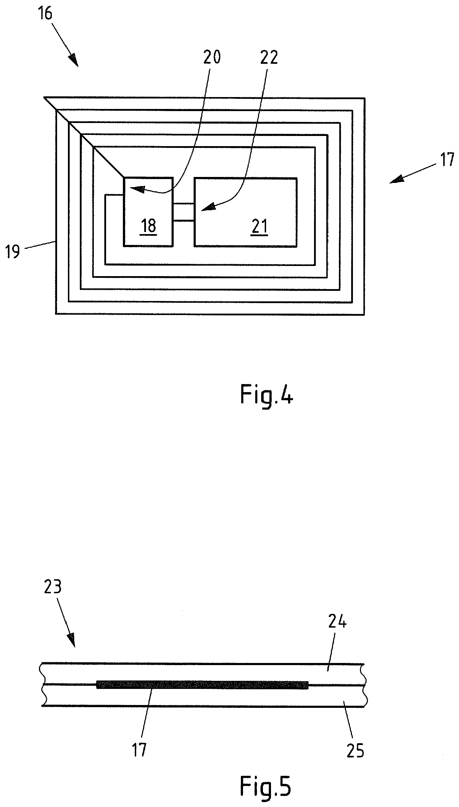

In der Fig. 4 ist ein Funktionselement 16 in Form einer Transpondereinheit 17 dargestellt. Die Transpondereinheit 17 umfasst dabei zwei separate Funktionselemente 16, nämlich eine Chipeinheit 18 mit einer integrierten Schaltung und eine Antenneneinheit 19, die über zwei Anschlüsse 20 oder Kontakte mit der Chipeinheit 18 verbunden ist. Zudem kann noch eine Sensoreinheit 21 vorgesehen sein, die dann ebenfalls über zwei Anschlüsse 22 oder Kontakte mit der Chipeinheit 18 und/oder der Antenneneinheit 19 verbunden sein kann. Die Sensoreinheit 21 umfasst dabei wenigstens einen Messaufnehmer, der durch den Zustand der Packung 15 und/oder den Zustand des in der Packung 15 enthaltenen Produkts beeinflussbar ist. Ein von dieser Beeinflussung abhängiges Signal wird von der Antenneneinheit 19 gesendet, um Informationen über den Zustand der Packung 15 und/oder den Zustand des darin enthaltenen Produkts weiterzugeben. Als Messaufnehmer kommen solche zur Erfassung der Temperatur, einer Substanz, der Konzentration einer Substanz, des pH-Werts, der Leitfähigkeit und dergleichen in Frage.

In der Fig. 5 ist ein in einer Hülle 23 aufgenommenes Funktionselement 16 in Form der Transpondereinheit 17 aus Fig. 4 in einer schematischen Seitenansicht dargestellt. Die Hülle 23 besteht in diesem Fall aus zwei Kunststofffolien 24,25, die die Transpondereinheit 17 einschließen und die miteinander verschweißt sind. Mithin ist das Funktionselement 16 zwischen den beiden Kunststofffolien 24,25 angeordnet.

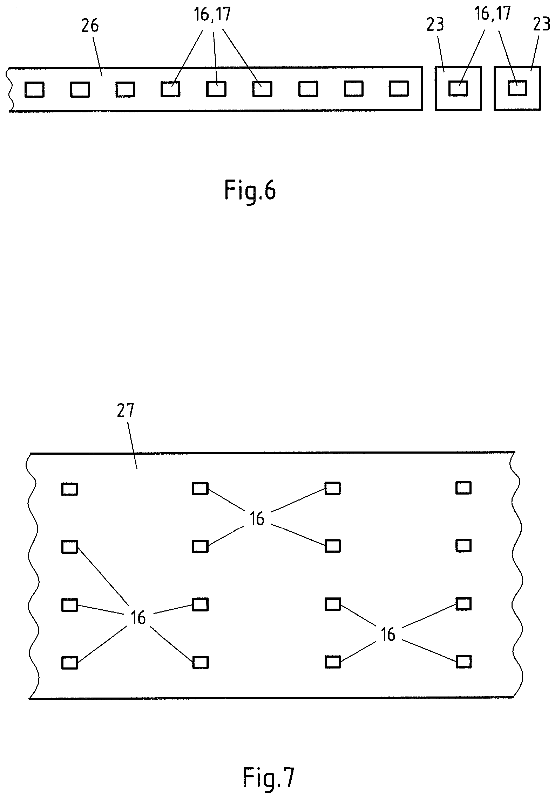

In der Fig. 6 ist eine Reihe von in einem Bahnmaterial 26 vorkonfektionierten Funktionselementen 16 in Form von Transpondereinheiten 17 in Draufsicht dargestellt. Das Bandmaterial 26 wird durch zwei parallele und miteinander verschweißte Kunststofffolien 24,25, zwischen denen in regelmäßigen Abständen die Funktionselemente 16 angeordnet sind, gebildet. Von dem Bahnmaterial 26 werden dann in regelmäßigen Abschnitten Stücke abgeschnitten, um so Hüllen 23 gemäß Fig. 5 mit darin aufgenommenen Funktionselementen 16 zu erhalten. Die Hüllen 23 können dann bei der Fertigung des Packungslaminats 1 in regelmäßigen Abständen in das Packungslaminat 1 eingebracht werden, so dass aus dem Packungslaminat 1 gleichartige Packungen 15 gebildet werden können, die allesamt eine entsprechende Hülle 23 bzw. ein entsprechendes Funktionselement 16 umfassen. Dabei bietet es sich ganz besonders an, wenn die Hüllen 23 bzw. die Funktionselemente 16 zwischen der Trägerschicht 4 und einer angrenzenden Verbindungsschicht 6 oder Barriereschicht 5 positioniert werden.

Um Spannungsspitzen an Kanten zu vermindern, die zu einem Delaminieren des Packungslaminats beitragen können, könnten die Zuschnitte der Hüllen 23 auch noch abgerundet oder gleich abgerundet aus dem Bahnmaterial 26 herausgestanzt werden, auch wenn dies nicht im Einzelnen dargestellt ist. Dabei kommt eine umlaufende Abrundung entlang der in der Fig. 6 dargestellten Kante der zugeschnittenen Hüllen 23 und/oder eine Abrundung der Kanten der zugeschnittenen Hüllen 23 in einer Richtung senkrecht zum Zuschnitt oder der Zeichenebene in Frage. Man spricht dabei auch von einem zweidimensionalen oder dreidimensionalen Verrunden, je nachdem in welcher Ebene die Rundungen angeordnet sind. Je ausgeprägter die wenigstens eine Abrundung ausfällt, desto geringer sind die Spannungsspitzen und die Tendenz des Delaminierens.

In der Fig. 7 ist ein Bahnmaterial 27 aus Kunststoff dargestellt, das als solches insbesondere als Verbindungsschicht 6 zwischen der Trägerschicht 4 und der Barriereschicht 5 oder als Barriereschicht 5 selbst der Länge nach in das Packungslaminat 1 aufgenommen werden kann. Dann wird beispielsweise keine Kunststoffschicht inline bei der Fertigung des Packungslaminats 1 durch Extrusion hergestellt, sondern als Bandmaterial 27 von einer Rolle abgerollt. Die Funktionselemente 16 sind dann bereits zuvor in regelmäßigen Abständen aufgebracht worden, so dass beim Einbringen des entsprechenden Bahnmaterials 27 in das Packungslaminat 1 ein Packungslaminat 1 erhalten wird, aus dem problemlos eine Reihe von gleichartigen Packungen 15 jeweils mit einem Funktionselement 16 der genannten Art gebildet werden können.

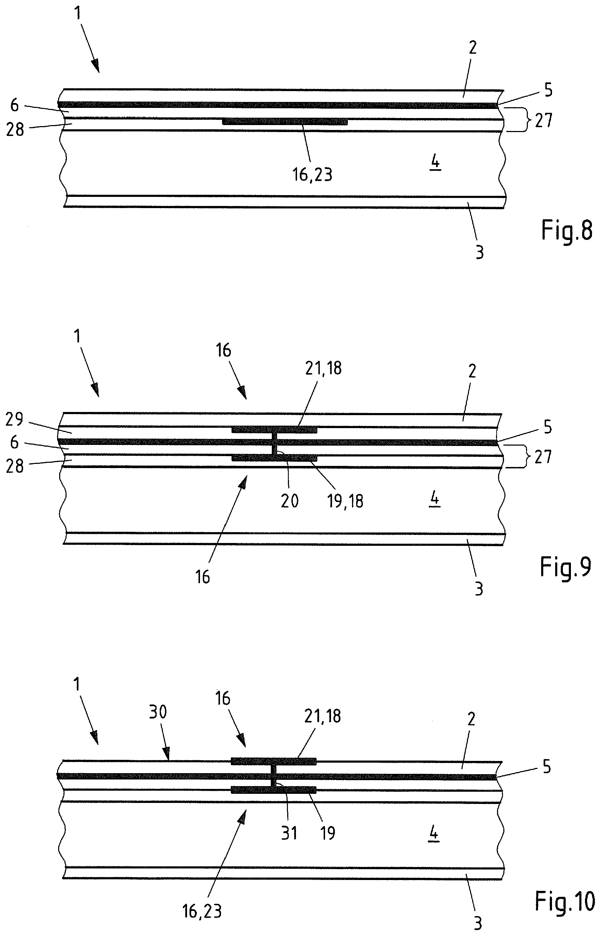

In der Fig. 8 ist ein Packungslaminat 1 in einer schematischen Seitenansicht dargestellt. Der Schichtaufbau entspricht dabei grundsätzlich dem Schichtaufbau des Packungslaminats 1 gemäß Fig. 1. Im Unterschied ist jedoch das Bahnmaterial 27 gemäß Fig. 7 anstelle der Verbindungsschicht 6 zwischen der Trägerschicht 4 und der Barriereschicht 5 vorgesehen. Es könnte sich beim Packungslaminat der Fig. 8 zwischen der Trägerschicht 4 und der Barriereschicht 5 um eine Verbindungsschicht 6 und eine Klebstoffschicht 28 handeln, in die das Funktionselement 16 eingedrückt wird. Die Klebstoffschicht 28 kann dann mit der Verbindungsschicht 6 oder wahlweise auch direkt mit der Barriereschicht 5 verklebt werden. In letzterem Fall kann Material eingespart werden, was aber nicht im Einzelnen in der Fig. 8 dargestellt ist. Zudem kann das Funktionselement 16 in einer bereits beschriebenen Hülle 23 in das Packungslaminat 1 integriert sein.

In der Fig. 9 ist ein alternatives Packungslaminat 1 in einer schematischen Seitenansicht dargestellt. Bei diesem ist anders als bei dem Packungslaminat 1 aus Fig. 1 wenigstens ein Funktionselement 16 in Form einer Sensoreinheit 21 auf einer als Montageschicht 29 ausgebildeten Kunststoffschicht vorgesehen, die auf der Außenseite der Barriereschicht 5 vorgesehen ist. Auch hierbei kann es sich um eine durch Extrusion gebildete Kunststoffschicht handeln, in die eine Hülse 23 gemäß Fig. 5 oder 6 eingelegt worden ist, bevor die angrenzende Deckschicht 2 aufgebracht wird. Aber auch hier sind andere Fertigungsmethoden denkbar, die zu demselben Schichtaufbau führen und bedarfsweise zuvor bereits beschrieben worden sind. Des Weiteren ist auf der gegenüberliegenden Seite der Barriereschicht 5 ein weiteres Funktionselement 16, wenigstens in Form einer Antenneneinheit 19, vorgesehen, wie das bereits im Zusammenhang mit der Fig. 8 beschrieben worden ist. Dies bietet sich insbesondere für metallische Barriereschichten 5 an, durch diese kein Funksignal gesendet werden kann. Diese beiden Funktionselemente 16, die grundsätzlich auch anderweitig auf gegenüberliegenden Seiten der Barriereschicht 5 vorgesehen werden können, sind über die Barriereschicht 5 hinweg über wenigstens zwei Anschlüsse 20 bzw. Kontakte miteinander verbunden. Der Antenneneinheit 19 und/oder der

Sensoreinheit 21 kann noch eine Chipeinheit 18 zugeordnet sein. Durch die Anordnung der Funktionselemente 16 auf beiden Seiten der Barriereschicht 5 kann zufriedenstellend der Zustand des Produkts in der Packung 2 erfasst und eine Information darüber von außerhalb der Packung 2 ausgelesen werden.

In der Fig. 10 ist ein alternatives Packungslaminat 1 zu dem in der Fig. 9 dargestellten Packungslaminat 1 dargestellt, bei dem auf der der Trägerschicht 4 abgewandten Seite der Barriereschicht 5 nur eine Kunststoffschicht vorgesehen ist, nämlich die Deckschicht 2. Das Funktionselement 16, das vorzugsweise eine Sensoreinheit 21 und bedarfsweise zusätzlich eine Chipeinheit 18 sein kann, ist dabei wenigstens teilweise in die Deckschicht 2 integriert. Das Funktionselement 16, insbesondere die Sensoreinheit 21, bildet dabei abschnittsweise die entsprechende Außenseite 30 der Deckschicht 2 oder ragt sogar teilweise aus der Deckschicht 2 nach außen vor. So kann durch den Messaufnehmer der Sensoreinheit 21 unter Umständen ein Messwert sehr schnell, genau und zuverlässig aufgenommen werden. Allerdings kann der Messaufnehmer so leichter beschädigt werden. Die Sensoreinheit 21 und bedarfsweise die Chipeinheit 18 ist/sind insbesondere für den Falle einer metallischen Barriereschicht 5 wie bei dem Packungslaminat 1 gemäß Fig. 9 mit einer Antenneneinheit 19 auf der anderen Seite der Barriereschicht 5 über die Barriereschicht 5 hinweg mittels zwei Anschlüssen 31 verbunden. Die Antenneneinheit 19 kann ansonsten durch die Barriereschicht 5 hindurch nicht zufriedenstellend Signale senden. Die Antenneneinheit 19 ist dabei gemäß dem Packungslaminat 1 gemäß Fig. 9 zwischen der Barriereschicht 5 und der Trägerschicht 4 vorgesehen und kann in einer bereits beschriebenen Hülle 23 vorgesehen sein. Grundsätzlich käme aber auch eine von der Darstellung der Fig. 9 abweichende Art der Anbringung in Betracht.

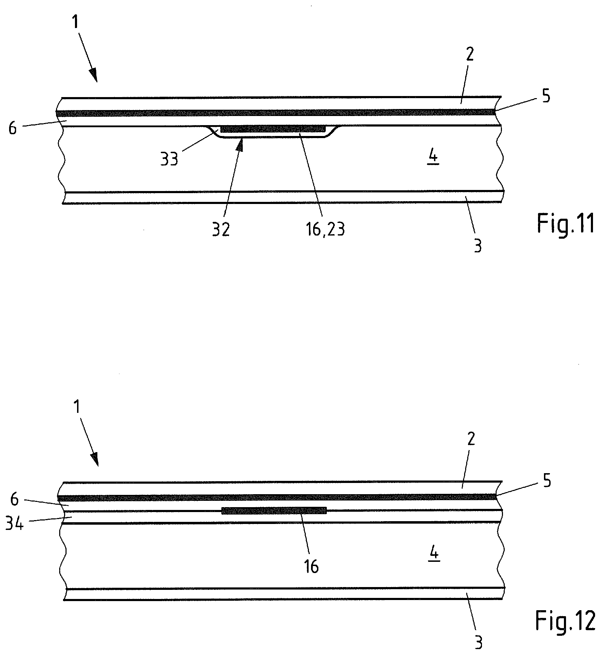

In der Fig. 11 ist ein alternatives Packungslaminat 1 in einer schematischen Seitenansicht dargestellt. Bei diesem ist anders als bei dem Packungslaminat 1 aus Fig. 1 wenigstens eine Aussparung 32 in der Trägerschicht vorgesehen, in der wenigstens teilweise ein Funktionselement 16 aufgenommen ist. Die Aussparung 32 kann beispielsweise durch Pressen und lokales Komprimieren, durch einen Materialabtrag oder durch vollständiges oder teilweises Herausstanzen von Material der Trägerschicht 4 gebildet werden. In die Aussparung 32 kann das Funktionselement 16 beispielsweise eingelegt oder eingeklebt werden. Zudem bietet es sich an, wenn das Funktionselement 16 in einer Hülle 23 gemäß Fig. 5 oder dergleichen aufgenommen ist, um das Funktionselement 16 beim Einbringen in die Aussparung 32 nicht zu beschädigen. Beispielsweise kann in die Aussparung 32 zunächst ein Klebstoff 33 eingebracht werden, in den dann das Funktionselement 16 oder das in einer Hülle 23 aufgenommene Funktionselement 16 eingedrückt wird. Durch die Überbeschichtung mit einer Kunststofffolie, etwa der Verbindungsschicht 6 wird wieder ein ebenes Packungslaminat 1 erhalten.

In der Fig. 12 ist ein alternatives Packungslaminat 1 in einer schematischen Seitenansicht dargestellt. Bei diesem ist anders als bei dem Packungslaminat 1 aus Fig. 1 eine Kunststoffschicht in Form einer Substratschicht 34 zwischen der Verbindungsschicht 6 zwischen der Trägerschicht 4 und der Barriereschicht 5 vorgesehen. Diese Substratschicht 34 wird fertigungstechnisch erst auf die Trägerschicht 4 aufgebracht, wobei die Kunststoffschicht erst inline durch Extrudieren geschaffen werden kann, aber nicht muss. Sodann wird auf die Substratschicht 34 wenigstens ein Funktionselement 16 aufgedruckt, und zwar vorzugsweise im Tiefdruck oder Flexodruck. Die Druckfarbe weist entsprechende, leitfähige Partikel auf, die das Funktionselement 16 bilden. Auf das wenigstens eine gedruckte Funktionselement 16 kann dann eine weitere Kunststoffschicht, etwa in Form der Verbindungsschicht 6 aufgebracht werden, um das gedruckte Funktionselement 16 zu schützen und bedarfsweise um die Barriereschicht 5 anzubinden.

Ganz grundsätzlich wird darauf hingewiesen, dass einzelne für unterschiedliche Ausführungsbeispiele eines Packungslaminats beschriebenen Schichten auch in anderer Weise miteinander und bedarfsweise mit ergänzenden Schichten oder Elementen kombiniert werden können. Alle denkbaren und für bestimmte

Anwendungen geeignete Schichtaufbauten bzw. Ausführungsformen können vorliegend mit vertretbarem Aufwand kaum dargestellt werden.

### Bezugszeichenliste

- 1: Packungslaminat
- 2,3: Deckschicht
- 4: Trägerschicht
- 5: Barriereschicht
- 6: Verbindungsschicht
- 7,8,9: Rolle
- 10: Packungszuschnitt
- 11: Packungsmantel
- 12: Längsnaht
- 13,14: Längsseite
- 15: Packung
- 16: Funktionselement
- 17: Transpondereinheit
- 18: Chipeinheit
- 19: Antenneneinheit
- 20: Anschlüsse
- 21: Sensoreinheit
- 22: Anschlüsse
- 23: Hülle
- 24,25: Kunststofffolien
- 26,27: Bahnmaterial
- 28: Klebstoffschicht
- 29: Montageschicht
- 30: Außenseite
- 31: Anschlüsse
- 32: Aussparung
- 33: Klebstoff
- 34: Substratschicht

## Patentansprüche

1. Packungslaminat (1) zur Bildung einer Packung (15) für fließfähige Produkte, mit einer aus einem Fasermaterial gebildeten, strukturgebenden Trägerschicht (4) und äußeren Deckschichten (2,3) aus Kunststoff,
**dadurch gekennzeichnet, dass**
zwischen der Trägerschicht (4) und einer Deckschicht (2,3) wenigstens ein als Chipeinheit (18) und Antenneneinheit (19) oder als Transpondereinheit (17) ausgebildetes Funktionselement (16), vorzugsweise in regelmäßigen Abständen, vorgesehen ist, dass die wenigstens eine Deckschicht (2,3) im Bereich des Funktionselements (16) durchgängig vorgesehen ist, dass zwischen der Trägerschicht (4) und der wenigstens einen Deckschicht (2,3) wenigstens eine als Gasbarriere, vorzugsweise als Sauerstoffbarriere, ausgebildete Barriereschicht (5) vorgesehen ist und dass das wenigstens eine Funktionselement (16) zwischen der im Bereich des Funktionselements (16) durchgängig ausgebildeten Barriereschicht (5) und der Trägerschicht (4) vorgesehen ist.

2. Packungslaminat nach Anspruch 1,
**dadurch gekennzeichnet, dass**
die Chipeinheit (18) wenigstens einen Mikrochip, Anschlüsse (20) zum Anschließen der Chipeinheit (18) an eine Antenneneinheit (19) und, bedarfsweise, ein Trägerelement zur Aufnahme des Mikrochip umfasst und/oder dass die Antenneneinheit (19) wenigstens eine Leiterbahn, vorzugsweise Leiterspirale oder Leiterspule, Anschlüsse (20) zum Anschließen der Antenneneinheit (19) an eine Chipeinheit und, bedarfsweise, ein Trägerelement zur Aufnahme der Leiterbahn umfasst und/oder dass die Transpondereinheit (17) einerseits wenigstens eine Antenneneinheit (19) und andererseits wenigstens eine Chipeinheit (18) und/oder wenigstens eine Sensoreinheit (21) umfasst.

3. Packungslaminat nach Anspruch 1 oder 2,
**dadurch gekennzeichnet, dass**
die Trägerschicht (4) aus einem zellulosehaltigen Fasermaterial, vorzugsweise aus Papier oder Karton gebildet wird und/oder dass die Deckschichten (2,3) aus einem thermoplastischen Kunststoff, vorzugsweise einem Polyolefin, insbesondere aus Polyethylen, gebildet sind und/oder dass die Barriereschicht (5) aus Metall, vorzugsweise Aluminium, aus einer mineralischen Schicht und/oder aus Kunststoff, vorzugsweise aus Polyamid (PA), Polyamid 6 (PA 6), Polyacrylnitril (PAN), Polyethylennaphthalat (PEN), Ethylen-Vinylalkohol-Copolymer (EVOH/EVAL), Polyvinylidenchlorid (PVDC) und/oder flüssigkristallinem Polymer (liquid crystal polymer, LCP) gebildet ist und/oder dass das wenigstens eine Funktionselement (16) in wenigstens einer Kunststoffschicht des Packungslaminats (1) aufgenommen, insbesondere eingeschweißt, ist und/oder dass das wenigstens eine Funktionselement (16) in einer separaten, lediglich bereichsweise vorgesehenen Hülle (23), vorzugsweise aus Kunststoff, zwischen den angrenzenden Schichten des Packungslaminats (1) aufgenommen, insbesondere eingeschweißt, ist und/oder dass das wenigstens eine Funktionselement (16), vorzugsweise aufgenommen oder eingeschweißt in einer separaten, lediglich bereichsweise vorgesehenen Hülle (23), insbesondere aus Kunststoff, vorzugsweise unter Verwendung eines Klebstoffs (28), mit der Trägerschicht (4), verklebt ist und/oder dass das wenigstens eine Funktionselement (16) auf wenigstens eine Schicht, insbesondere in Form einer Substratschicht (34) des Packungslaminats (1) aufgedruckt ist.

4. Packungslaminat nach einem der Ansprüche 2 oder 3,
**dadurch gekennzeichnet, dass**
die Trägerschicht (4) mit der Barriereschicht (5) über eine Klebstoffschicht (28) verklebt ist und dass, vorzugsweise, das wenigstens eine Funktionselement (16) wenigstens teilweise in der Klebstoffschicht (28) aufgenommen ist.

5. Packungslaminat nach einem der Ansprüche 1 bis 4,
**dadurch gekennzeichnet, dass**
das wenigstens eine Funktionselement (16) wenigstens teilweise in eine bereichsweise vorgesehene Aussparung (32) der Trägerschicht (4) aufgenommen ist und dass, vorzugsweise, die Aussparung (32) durch eine Kompression der Trägerschicht (4), durch einen Materialabtrag aus der Trägerschicht (4) und/oder durch ein Ausstanzen eines Teils der Trägerschicht (4) bereitgestellt wird.

6. Packungszuschnitt (10) hergestellt aus einem Packungslaminat (1) nach einem der Ansprüche 1 bis 5.

7. Packungsmantel (11) hergestellt aus einem Packungslaminat nach einem der Ansprüche 1 bis 5 und/oder aus einem Packungszuschnitt (10) nach Anspruch 6, wobei gegenüberliegende Ränder des Packungszuschnitts (10) miteinander verbunden, vorzugsweise miteinander verschweißt oder verklebt sind.

8. Packung (15) herstellt aus einem Packungslaminat (1) nach einem der Ansprüche 1 bis 5, vorzugsweise aus einem Packungsmantel (11) nach Anspruch 7, mit einem Packungskopf, einem Packungsboden und einem Mantelabschnitt, wobei der Packungskopf, der Packungsboden und der Mantelabschnitt flüssigkeitsdicht verschlossen, insbesondere gesiegelt, sind.

9. Verfahren zur Herstellung eines Packungslaminats (1) zur Bildung einer Packung (15) für fließfähige Produkte,
- bei dem eine aus einem Fasermaterial gebildete, strukturgebende Trägerschicht (4) mit äußeren Deckschichten (2,3) aus Kunststoff verbunden, insbesondere laminiert, wird und
- bei dem wenigstens ein als Chipeinheit (18) und Antenneneinheit (19) oder als Transpondereinheit (17) ausgebildetes Funktionselement (16), vorzugsweise in regelmäßigen Abständen, zwischen der Trägerschicht (4) und der Deckschicht (2,3) vorgesehen wird,
- bei dem zwischen der Trägerschicht (4) und der im Bereich des Funktionselements (16) durchgängig vorgesehenen Deckschicht (2,3) wenigstens eine als Gasbarriere, vorzugsweise als Sauerstoffbarriere, ausgebildete Barriereschicht (5) vorgesehen wird und
- bei dem wenigstens ein Funktionselement (16), vorzugsweise in regelmäßigen Abständen, zwischen der im Bereich des Funktionselements (16) durchgängig ausgebildeten Barriereschicht (5) und der Trägerschicht (4) vorgesehen wird.

10. Verfahren nach Anspruch 9,
- bei dem eine wenigstens ein Mikrochip, Anschlüsse (20) zum Anschließen der Chipeinheit (18) an eine Antenneneinheit (19) und, bedarfsweise, ein Trägerelement zur Aufnahme des Mikrochips aufweisende Chipeinheit (18) verwendet wird und/oder
- bei dem eine wenigstens eine Leiterbahn, vorzugsweise Leiterspule, Anschlüsse (20) zum Anschließen der Antenneneinheit (19) an eine Chipeinheit (18) und, bedarfsweise, ein Trägerelement zur Aufnahme der Leiterbahn aufweisende Antenneneinheit (19) verwendet wird und/oder
- bei dem eine wenigstens einen von einer Messgröße beeinflussbaren Messaufnehmer und/oder Messumformer aufweisende Sensoreinheit (21) verwendet wird und/oder
- bei dem eine einerseits wenigstens eine Antenneneinheit (19) und andererseits wenigstens eine Chipeinheit (18) und/oder wenigstens eine Sensoreinheit (21) aufweisende Transpondereinheit (17) verwendet wird.

11. Verfahren nach Anspruch 9 oder 10,
- bei dem die Trägerschicht (4) aus einem zellulosehaltigen Fasermaterial, vorzugsweise aus Papier oder Karton gebildet wird und/oder dass die Deckschichten (2,3) aus einem thermoplastischen Kunststoff, vorzugsweise einem Polyolefin, insbesondere aus Polyethylen, gebildet sind und/oder dass die Barriereschicht (5) aus Metall, vorzugsweise Aluminium, aus einer mineralischen Schicht, und/oder aus Kunststoff, vorzugsweise aus Polyamid (PA), Polyamid 6 (PA 6), Polyacrylnitril (PAN), Polyethylennaphthalat (PEN), Ethylen-Vinylalkohol-Copolymer (EVOH/EVAL), Polyvinylidenchlorid (PVDC) und/oder flüssigkristallinem Polymer (liquid crystal polymer, LCP) gebildet ist und/oder
- bei dem wenigstens eine Kunststoffschicht, in der wenigstens ein Funktionselement (16) in einer Kunststoffschicht aufgenommen oder eingeschweißt ist, mit wenigstens einer weiteren Schicht des Packungslaminats (1) verbunden wird und/oder
- bei dem wenigstens ein, vorzugsweise in einer Hülle (23), insbesondere aus Kunststoff, aufgenommenes, Funktionselement (16) mit einer Schicht des Packungslaminats (1) verbunden, vorzugsweise verklebt und über das wenigstens eine Funktionselement (16) eine Kunststoffschicht laminiert wird und/oder
- bei dem wenigstens ein, vorzugsweise in einer Hülle (23), insbesondere aus Kunststoff, aufgenommenes, Funktionselement (16) wenigstens teilweise in eine Kunststoffschicht oder eine Klebstoffschicht (28) des Packungslaminats (1) wenigstens teilweise eingebracht, vorzugsweise eingedrückt, wird und/oder
- bei dem, insbesondere in regelmäßigen Abständen, wenigstens ein in einer Hülle (23), insbesondere aus Kunststoff, aufgenommenes, Funktionselement (16) mit einer anderen als der Deckschicht (2,3), vorzugsweise der Trägerschicht (4), verbunden, insbesondere verklebt wird und/oder
- bei dem wenigstens ein Funktionselement (16) auf eine Schicht, vorzugsweise die Trägerschicht (4) oder eine Kunststoffschicht, etwa als Substratschicht (34), des Packungslaminats (1) aufgedruckt wird.

12. Verfahren nach einem der Ansprüche 9 bis 11,
- bei dem in die Trägerschicht (4) bereichsweise, vorzugsweise in regelmäßigen Abständen, wenigstens eine Aussparung (32) vorgesehen, vorzugsweise eingepresst, durch Materialabtrag eingebracht und/oder eingestanzt, wird und
- bei dem wenigstens ein Funktionselement (16) wenigstens teilweise in die wenigstens eine Aussparung (32) eingebracht wird und
- bei dem, vorzugsweise das wenigstens eine Funktionselement (16) in der Aussparung der Trägerschicht (4), vorzugsweise durch Verkleben mit der Trägerschicht (4) oder Aufbringen einer weiteren Schicht des Packungslaminats (1) auf die Trägerschicht (4), fixiert wird.

13. Verfahren zur Herstellung eines Packungszuschnitts (10),
bei dem ein Packungslaminat (1) nach einem der Ansprüche 9 bis 12 hergestellt und ein Teil des Packungslaminats (1) abgetrennt wird.

14. Verfahren zur Herstellung eines Packungsmantels (11),
- bei dem ein Packungslaminat (1) nach einem der Ansprüche 9 bis 12 oder ein Packungszuschnitt (10) nach Anspruch 13 hergestellt wird und
- bei dem gegenüberliegende Ränder des Packungslaminat (1) oder Packungszuschnitts (10) miteinander verbundenen, vorzugsweise miteinander verschweißt, werden.

15. Verfahren zur Herstellung einer Packung (15),
- bei dem ein Packungslaminat (1) nach einem der Ansprüche 9 bis 12 oder ein Packungszuschnitt (10) nach Anspruch 13 hergestellt wird und
- bei dem ein Packungskopf, ein Packungsboden und ein Mantelabschnitt hergestellt und flüssigkeitsdicht verschlossen, insbesondere gesiegelt, werden.

## Claims

1. Package laminate (1) for forming a package (15) for flowable products, with a structuring carrier layer (4), which is formed from a fibre material, and outer cover layers (2, 3) made of plastic,
**characterised in that** at least one functional element (16), which is designed as a chip unit (18) and antenna unit (19) or as a transponder unit (17), is provided, preferably at regular intervals, between the carrier layer (4) and a cover layer (2, 3), **in that** the at least one cover layer (2, 3) is provided continuously in the region of the functional element (16), **in that** at least one barrier layer (5), which is designed as a gas barrier, preferably as an oxygen barrier, is provided between the carrier layer (4) and the at least one cover layer (2, 3) and **in that** the at least one functional element (16) is provided between the barrier layer (5), which is formed continuously in the region of the functional element (16), and the carrier layer (4).

2. Package laminate according to claim 1,
**characterised in that** the chip unit (18) comprises at least one microchip, connections (20) for connecting the chip unit (18) to an antenna unit (19) and, if required, a carrier element for receiving the microchip and/or **in that** the antenna unit (19) comprises at least one conductor path, preferably conductor spiral or conductor coil, connections (20) for connecting the antenna unit (19) to a chip unit and, if required, a carrier element for receiving the conductor path and/or **in that** the transponder unit (17) comprises, on the one hand, at least one antenna unit (19) and, on the other hand, at least one chip unit (18) and/or at least one sensor unit (21).

3. Package laminate according to claim 1 or 2,
**characterised in that** the carrier layer (4) is formed from a cellulose-containing fibre material, preferably from paper or cardboard, and/or **in that** the cover layers (2, 3) are formed from a thermoplastic, preferably a polyolefin, in particular from polyethylene, and/or **in that** the barrier layer (5) is formed from metal, preferably aluminium, from a mineral layer and/or from plastic, preferably from polyamide (PA), polyamide 6 (PA 6), polyacrylonitrile (PAN), polyethylene naphthalate (PEN), ethylene vinyl alcohol copolymer (EVOH/EVAL), polyvinylidene chloride (PVDC) and/or liquid crystal polymer (LCP) and/or **in that** the at least one functional element (16) is received, in particular welded, into at least one plastic layer of the package laminate (1) and/or **in that** the at least one functional element (16) is received, in particular welded, in a separate sleeve (23), preferably made of plastic, provided only in regions between the adjoining layers of the package laminate (1) and/or **in that** the at least one functional element (16), preferably received or welded in a separate sleeve (23), in particular made of plastic, provided only in regions is adhered to the carrier layer (4), preferably using an adhesive (28), and/or **in that** the at least one functional element (16) is printed onto at least one layer, in particular in the form of a substrate layer (34) of the package laminate (1).

4. Package laminate according to any one of claims 2 or 3,
**characterised in that** the carrier layer (4) is adhered to the barrier layer (5) via an adhesive layer (28) and **in that**, preferably, the at least one functional element (16) is at least partially received in the adhesive layer (28).

5. Package laminate according to any one of claims 1 or 4,
**characterised in that** the at least one functional element (16) is received at least partially in a recess (32) of the carrier layer (4) provided in regions, and **in that**, preferably, the recess (32) is provided by compression of the carrier layer (4), by material removal from the carrier layer (4) and/or by punching out a part of the carrier layer (4).

6. Package blank (10) manufactured from a package laminate (1) according to any one of claims 1 to 5.

7. Package sleeve (11) manufactured from a package laminate according to any one of claims 1 to 5 and/or from a package blank (10) according to claim 6, wherein opposing edges of the package blank (10) are connected to one another, preferably welded or adhered to one another.

8. Package (15) manufactured from a package laminate (1) according to any one of claims 1 to 5, preferably from a package sleeve (11) according to claim 7, with a package head, a package base and a sleeve section, wherein the package head, the package base and the sleeve section are closed, in particular sealed, in a liquid-tight manner.

9. Method for manufacturing a package laminate (1) for forming a package (15) for flowable products,
- in which a structuring carrier layer (4), which is formed from a fibre material, is connected, in particular laminated, to outer cover layers (2, 3) made of plastic and
- in which at least one functional element (16), which is designed as a chip unit (18) and antenna unit (19) or as a transponder unit (17), is provided, preferably at regular intervals, between the carrier layer (4) and the cover layer (2, 3),
- in which at least one barrier layer (5), which is designed as a gas barrier, preferably as an oxygen barrier, is provided between the carrier layer (4) and the cover layer (2, 3), which is provided continuously in the region of the functional element (16), and
- in which at least one functional element (16) is provided, preferably at regular intervals, between the barrier layer (5), which is formed continuously in the region of the functional element (16), and the carrier layer (4).

10. Method according to claim 9,
- in which a chip unit (18) is used, which has at least one microchip, connections (20) for connecting the chip unit (18) to an antenna unit (19) and, if required, a carrier element for receiving the microchip, and/or
- in which an antenna unit (19) is used, which has at least one conductor path, preferably conductor coil, connections (20) for connecting the antenna unit (19) to a chip unit (18) and, if required, a carrier element for receiving the conductor path, and/or
- in which a sensor unit (21) is used, which has at least one sensor and/or transducer that can be influenced by a measurement variable, and/or
- in which a transponder unit (17) is used, which, on the one hand, has at least one antenna unit (19) and, on the other hand, at least one chip unit (18) and/or at least one sensor unit (21).

11. Method according to claim 9 or 10,
- in which the carrier layer (4) is formed from a cellulose-containing fibre material, preferably from paper or cardboard, and/or in that the cover layers (2, 3) are formed from a thermoplastic, preferably a polyolefin, in particular from polyethylene, and/or in that the barrier layer (5) is formed from metal, preferably aluminium, from a mineral layer and/or from plastic, preferably from polyamide (PA), polyamide 6 (PA 6), polyacrylonitrile (PAN), polyethylene naphthalate (PEN), ethylene vinyl alcohol copolymer (EVOH/EVAL), polyvinylidene chloride (PVDC) and/or liquid crystal polymer (LCP) and/or
- in which at least one plastic layer, in which at least one functional element (16) is received or welded into a plastic layer, is connected to at least one further layer of the package laminate (1) and/or
- in which at least one functional element (16), which is received, preferably in a sleeve (23), in particular made of plastic, is connected, preferably adhered, to a layer of the package laminate (1) and a plastic layer is laminated over the at least one functional element (16) and/or
- in which at least one functional element (16), which is received preferably in a sleeve (23), in particular made of plastic, is introduced, preferably pressed, at least partially into a plastic layer or an adhesive layer (28) of the package laminate (1), and/or
- in which, in particular at regular intervals, at least one functional element (16), which is received in a sleeve (23), in particular made of plastic, is connected, in particular adhered, to a layer other than the cover layer (2, 3), preferably the carrier layer (4), and/or
- in which at least one functional element (16) is printed on a layer, preferably the carrier layer (4) or a plastic layer, for example as a substrate layer (34), of the package laminate (1).

12. Method according to any one of claims 9 to 11,
- in which at least one recess (32) is provided, preferably pressed, introduced by material removal and/or punched, into the carrier layer (4) in sections, preferably at regular intervals, and
- in which at least one functional element (16) is introduced at least partially into the at least one recess (32) and
- in which, preferably the at least one functional element (16) is fixed in the recess of the carrier layer (4), preferably by adhering to the carrier layer (4) or applying a further layer of the package laminate (1) to the carrier layer (4).

13. Method for manufacturing a package blank (10),
in which a package laminate (1) according to any one of claims 9 to 12 is manufactured and a part of the package laminate (1) is separated.

14. Method for manufacturing a package sleeve (11),
- in which a package laminate (1) according to any one of claims 9 to 12 or a package blank (10) according to claim 13 is manufactured and
- in which opposing edges of the package laminate (1) or package blank (10) are connected to one another, preferably welded to one another.

15. Method for manufacturing a package (15),
- in which a package laminate (1) according to any one of claims 9 to 12 or a package blank (10) according to claim 13 is manufactured and
- in which a package head, a package base and a sleeve section are manufactured and closed, in particular sealed, in a liquid-tight manner.

## Revendications

1. Stratifié d'emballage (1) pour former un emballage (15) pour des produits fluides, avec une couche de support (4) structurante constituée d'un matériau fibreux et des couches de recouvrement extérieures (2, 3) en matière synthétique,
**caractérisé en ce que** l'on prévoit, entre la couche de support (4) et une couche de recouvrement (2, 3), au moins un élément fonctionnel (16), conçu sous forme d'une unité formant puce (18) et d'une unité d'antenne (19) ou d'unité de transpondeur (17), de préférence à des intervalles réguliers, **en ce que** l'on prévoit ladite au moins une couche de recouvrement (2, 3) en continu au niveau de l'élément fonctionnel (16), **en ce que** l'on prévoit, entre la couche de support (4) et ladite au moins une couche de recouvrement (2, 3), au moins une couche formant barrière (5) conçue sous forme de barrière aux gaz, de préférence sous forme de barrière à l'oxygène, et **en ce que** l'on prévoit au moins un élément fonctionnel (16) entre la couche formant barrière (5), conçue en continu au niveau de l'élément fonctionnel (16), et la couche de support (4).

2. Stratifié d'emballage selon la revendication 1,
**caractérisé en ce que** l'unité formant puce (18) comprend au moins une micropuce, des raccords (20) pour le raccordement de l'unité formant puce (18) à une unité d'antenne (19) et, si nécessaire, un élément de support pour loger la micropuce et/ou **en ce que** l'unité d'antenne (19) comprend au moins une piste conductrice, de préférence une spirale conductrice ou une bobine conductrice, des raccords (20) pour le raccordement de l'unité d'antenne (19) à une unité formant puce et, si nécessaire, un élément de support pour loger la piste conductrice et/ou **en ce que** l'unité de transpondeur (17) comprend d'une part au moins une unité d'antenne (19) et d'autre part au moins une unité formant puce (18) et/ou au moins une unité de type capteur (21).

3. Stratifié d'emballage selon la revendication 1 ou 2,
**caractérisé en ce que** la couche de support (4) est constituée d'un matériau fibreux cellulosique, de préférence du papier ou du carton, et/ou **en ce que** les couches de recouvrement (2, 3) sont constituées d'une matière synthétique thermoplastique, de préférence une polyoléfine, notamment du polyéthylène, et/ou **en ce que** la couche formant barrière (5) est constituée de métal, de préférence de l'aluminium, d'une couche minérale et/ou d'une matière synthétique, de préférence du polyamide (PA), polyamide 6 (PA 6), polyacrylonitrile (PAN), naphtalate de polyéthylène (PEN), copolymère d'éthylène-alcool vinylique (EVOH/EVAL), chlorure de polyvinylidène (PVDC) et/ou polymère cristallin liquide (liquid crystal polymer, LCP) et/ou **en ce que** ledit au moins un élément fonctionnel (16) est intégré, notamment soudé, dans au moins une couche en matière synthétique du stratifié d'emballage (1), et/ou **en ce que** ledit au moins un élément fonctionnel (16) est intégré, notamment soudé, dans un revêtement (23) séparé, prévu uniquement par endroit, de préférence en matière synthétique, entre les couches adjacentes du stratifié d'emballage (1) et/ou **en ce que** ledit au moins un élément fonctionnel (16), est, de préférence, intégré ou soudé à un revêtement (23) séparé, prévu uniquement par endroit, notamment en matière synthétique, et est collé avec la couche de support (4), de préférence en utilisant une colle (28), et/ou **en ce que** ledit au moins un élément fonctionnel (16) est imprimé sur au moins une couche, notamment sous la forme d'une couche de substrat (34) du stratifié d'emballage (1).

4. Stratifié d'emballage selon l'une des revendications 2 ou 3,
**caractérisé en ce que** la couche de support (4) est collée avec la couche formant barrière (5) par l'intermédiaire d'une couche de colle (28) et **en ce que**, de préférence, au moins un élément fonctionnel (16) est intégré, au moins partiellement, dans la couche de colle (28).

5. Stratifié d'emballage selon l'une des revendications 1 à 4,
**caractérisé en ce que** ledit au moins un élément fonctionnel (16) est intégré, au moins partiellement, dans un évidement (32) de la couche de support (4) prévu par endroit et **en ce que**, de préférence, l'évidement (32) est mis à disposition par une compression de la couche de support (4), par un enlèvement de matière de la couche de support (4) et/ou par un poinçonnage d'une partie de la couche de support (4).

6. Flan d'emballage (10) fabriqué à partir d'un stratifié d'emballage (1) selon l'une des revendications 1 à 5.

7. Enveloppe d'emballage (11) fabriquée à partir d'un stratifié d'emballage selon l'une des revendications 1 à 5 et/ou à partir d'un flan d'emballage (10) selon la revendication 6, les bords opposés du flan d'emballage (10) étant reliés, de préférence étant soudés ou collés, entre eux.

8. Emballage (15) fabriqué à partir d'un stratifié d'emballage (1) selon l'une des revendications 1 à 5, de préférence à partir d'une enveloppe d'emballage (11) selon la revendication 7, avec une tête d'emballage, un fond d'emballage et une section d'enveloppe, la tête d'emballage, le fond d'emballage et la section d'enveloppe étant fermés, notamment scellées, de manière étanche aux liquides.

9. Procédé de fabrication d'un stratifié d'emballage (1) pour former un emballage (15) pour produits fluides ;
- dans lequel une couche de support (4) structurante constituée d'un matériau fibreux est reliée, notamment stratifiée, à des couches de recouvrement (2, 3) extérieures en matière synthétique, et
- dans lequel l'on prévoit ledit au moins un élément fonctionnel (16) conçu sous forme d'unité formant puce (18) et d'unité d'antenne (19) ou d'unité de transpondeur (17), de préférence à des intervalles réguliers, entre la couche de support (4) et la couche de recouvrement (2, 3),
- dans lequel l'on prévoit, entre la couche de support (4) et la couche de recouvrement (2,3), prévue en continu au niveau de l'élément fonctionnel (16), au moins une couche formant barrière (5) conçue sous forme de barrière aux gaz, de préférence sous forme de barrière à l'oxygène, et
- dans lequel l'on prévoit au moins un élément fonctionnel (16), de préférence à des intervalles réguliers, entre la couche formant barrière (5), formée en continu au niveau de l'élément fonctionnel (16), et la couche de support (4).

10. Procédé selon la revendication 9,
- dans lequel l'on utilise une unité formant puce (18) présentant au moins une micropuce, des raccords (20) pour raccorder l'unité formant puce (18) à une unité d'antenne (19) et, si nécessaire, un élément de support pour loger la micropuce et/ou
- dans lequel au moins une piste conductrice, de préférence une bobine conductrice, des raccords (20) pour le raccordement de l'unité d'antenne (19) à une unité formant puce (18) et, si nécessaire, un élément de support pour loger l'unité d'antenne (19) comportant la piste conductrice et/ou
- dans lequel l'on utilise au moins une unité de type capteur (21) présentant au moins un capteur de mesure et/ou un transducteur de mesure pouvant être influencé par une grandeur de mesure et/ou
- dans lequel l'on utilise une unité de transpondeur (17) comportant d'une part au moins une unité d'antenne (19) et d'autre part au moins une unité formant puce (18) et/ou au moins une unité de type capteur (21).

11. Procédé selon la revendication 9 ou 10,
- dans lequel la couche de support (4) est constituée d'un matériau fibreux cellulosique, de préférence du papier ou du carton, et/ou en ce que les couches de recouvrement (2, 3) sont constituées d'une matière synthétique thermoplastique, de préférence d'une polyoléfine, notamment du polyéthylène, et/ou en ce que la couche formant barrière (5) est constituée de métal, de préférence de l'aluminium, d'une couche minérale, et/ou de matière synthétique, de préférence de polyamide (PA), polyamide 6 (PA 6), polyacrylonitrile (PAN), naphtalate de polyéthylène (PEN), copolymère d'éthylène-alcool vinylique (EVOH/EVAL), chlorure de polyvinylidène (PVDC) et/ou polymère cristallin liquide (liquid crystal polymer, LCP) et/ou
- dans lequel au moins une couche de matière synthétique, dans laquelle au moins un élément fonctionnel (16) est logé ou soudé dans une couche de matière synthétique, est reliée à au moins une autre couche du stratifié d'emballage (1) et/ou
- dans lequel au moins un élément fonctionnel (16) intégré, de préférence dans un revêtement (23), notamment en matière synthétique, est relié, de préférence collé, à une couche du stratifié d'emballage (1), et une couche en matière synthétique est stratifiée par l'intermédiaire d'au moins un élément fonctionnel (16) et/ou
- dans lequel au moins un élément fonctionnel (16) intégré, de préférence dans une revêtement (23), notamment en matière synthétique, est au moins partiellement inséré, de préférence pressé, dans une couche en matière synthétique ou une couche de colle (28) du stratifié d'emballage (1), et/ou
- dans lequel, notamment à des intervalles réguliers, au moins un élément fonctionnel (16) intégré dans un revêtement (23), notamment en matière synthétique, est relié, notamment collé, à une couche autre que la couche de recouvrement (2, 3), de préférence que la couche de support (4), et/ou
- dans lequel au moins un élément fonctionnel (16) est imprimé sur une couche, de préférence la couche de support (4) ou une couche en matière synthétique, par exemple une couche de substrat (34), du stratifié d'emballage (1).

12. Procédé selon l'une des revendications 9 à 11,
- dans lequel l'on prévoit, de préférence pressé, au moins un évidement (32), de préférence à des intervalles réguliers, inséré et/ou poinçonné par enlèvement de matière, par endroit, dans la couche de support (4) et
- dans lequel au moins un élément fonctionnel (16) est inséré, au moins partiellement, dans au moins un évidement (32) et
- dans lequel, de préférence, ledit au moins un élément fonctionnel (16) est fixé dans l'évidement de la couche de support (4), de préférence par collage avec la couche de support (4) ou par l'application d'une autre couche du stratifié de l'emballage (1) sur la couche de support (4).

13. Procédé de fabrication d'un flan d'emballage (10),
dans lequel un stratifié d'emballage (1) est fabriqué selon l'une des revendications 9 à 12 et une partie du stratifié d'emballage (1) est découpée.

14. Procédé de fabrication d'une enveloppe d'emballage (11),
- dans lequel un stratifié d'emballage (1) est fabriqué selon l'une des revendications 9 à 12 ou un flan d'emballage (10) est fabriqué selon la revendication 13, et
- dans lequel les bords opposés du stratifié d'emballage (1) ou du flan d'emballage (10) sont assemblés, de préférence soudés, l'un à l'autre.

15. Procédé de fabrication d'un emballage (15),
- dans lequel un stratifié d'emballage (1) est fabriqué selon l'une des revendications 9 à 12 ou un flan d'emballage (10) est fabriqué selon la revendication 13, et
- dans lequel une tête d'emballage, un fond d'emballage et une section d'enveloppe sont fabriqués et fermés, notamment scellées, de manière étanche aux liquides.
